# EUROPEAN PATENT SPECIFICATION

(11) **EP 1 001 194 B1**
(45) Date of publication and mention of the grant of the patent: **02.01.2004**
(21) Application number: 99110186.6
(22) Date of filing: 26.05.1999
(51) Int. Cl.: F16H 61/42, B60K 17/10

(54) **Internal damping system for hydrostatic transmission for driving axle**
Internes Dämpfungssystem für ein hydrostatisches Getriebe für eine Antriebsachse
Système d'amortissement interne pour une transmission hydrostatique pour un axe d'entraînement

(30) Priority: 16.11.1998 US 192315
(43) Date of publication of application: 17.05.2000
(73) Proprietor: KANZAKI KOKYUKOKI MFG. CO., LTD., Amagasaki-shi, Hyogo-ken (JP)
(72) Inventor: Shimizu, Hiroaki, Amagasaki-shi, Hyogo-ken (JP); Ohashi, Ryota, Amagasaki-shi, Hyogo-ken (JP); Iida, Masaru, Amagasaki-shi, Hyogo-ken (JP)
(74) Representative: Henkel, Feiler, Hänzel

(56) References cited:
- EP-A- 0 495 146
- US-A- 5 235 810
- US-A- 5 809 781
- PATENT ABSTRACTS OF JAPAN vol. 1998, no. 05, 30 April 1998 (1998-04-30) & JP 10 009385 A (KANZAKI KOKYUKOKI MFG CO LTD), 13 January 1998 (1998-01-13) & JP 10 009385 A (KANZAKI KOKYUKOKI) 13 January 1998 (1998-01-13) & EP 0 900 958 A (KANZAKI KOKYUKOKI MFG) 10 March 1999 (1999-03-10)

## Description

### Background of the Invention

### Field of the Invention

The present invention relates to an improved hydrostatic transmission according to the preamble of claim 1.

### Related Art

Conventionally, an HST comprising a hydraulic pump with variable capacity and a hydraulic motor, which are fluidly connected through a pair of fluid passages in a closed fluid circuit, has a capacity changing means including a movable swash plate of the hydraulic pump. During accelerating or cruising operation in advancing, one of the pair of fluid passages is hydraulically pressured higher than the other, and during such operation in reversing, a higher pressured fluid passage exchanges from the one to the other. The capacity changing means interlocks with a speed changing means like a lever, which is provided on a vehicle so as to be operated by a driver. When a driver shifts the speed changing means, the movable swash plate is rotated in. proportion to the movement of the speed changing means, thereby changing the quantity of fluid discharged from the hydraulic pump to the hydraulic motor steplessly. The capacity changing means is always biased toward the neutral position by a spring or the like, so that when the driver releases the speed changing means or frees it so as to stop the accelerating or cruising operation, the movable swash plate automatically returns to the neutral position by the biasing force.

However, when the speed changing means is released at a high speed position, the movable swash plate suddenly returns to the neutral position so that the circulated fluid is blocked in the hydraulic pump, thereby stopping the rotation of the hydraulic motor suddenly, in other words, generating a "dynamic brake".

One of the typical conventional buffer for preventing the movable swash plate from sudden returning to the neutral position is disclosed in Japanese Utility Model Laid Open Gazette No. Hei 4-66454, for example, wherein a shock absorber (serving as an "external damping system") is attached to the capacity changing means (its control arm).

Another buffer is disclosed in U. S. Patent No. 5809781, for example, wherein an "internal damping system (IDS)" consisting of a pressing member (like a plate) interlocking with the capacity changing means and pistons pressed against the pressing member by hydraulic pressure in the closed fluid circuit of the HST is constructed so as to restrict the speed of the capacity changing means returning to the neutral position. The pistons are provided-with respective orifices which are in communication with respective fluid passages of the closed fluid circuit, so that the pressure oil(fluid) is drained (toward fluid sump formed in a housing or the like) when the movable swash plate is in neutral, thereby enhancing the neutral range and making the axles freely rotatable.

Referring to the former of the above two buffer for the neutral-returning of the capacity changing means, the shock absorber can be easily detachably disposed outside the housing. However, the external shock absorber is subject to the heat dissipated from the housing, in which the temperature of damping fluid is increased, and also susceptible to the outside-air temperature. The volume of gas or liquid, which the shock absorber uses for its damping actuation, is increased or reduced according to the change of temperature. As a result, the operational feeling is made different by the change of temperature and the neutral position cannot be easily identified in the condition of high or low temperature.

Also, the external shock absorber requires the space for its attachment, whereby a transaxle apparatus comprising the HST is restricted in its shape and is excessively expanded as a whole. Furthermore, the external shock absorber; which is subject to rain water or dust which inhibits the normal action thereof, is conventionally provided with a required protector like a rubber boot which protects its working portion, thereby increasing the number and cost of parts as a result.

Next, in the latter IDS, the pressing member can be formed integrally with a control arm of the capacity changing means and the pistons can be attached to the center section of the HST, thereby enabling the increase of parts to be limited. Also, these members can be contained in the housing of the apparatus, thereby compacting the apparatus and requiring no protecting member against rain or dust. As a result, this system is advantageous in its compact structure, low cost and good durability and in that it can easily identify the neutral position.

Referring to a vehicle having the hydrostatic transaxle apparatus provided with such an IDS, when a driver frees the speed changing means, the capacity changing means gradually returns to the neutral position by the biasing means like a spring against resistant force generated by the pressure force of the pistons against the pressing member, thereby preventing the capacity changing means from sudden movement. However, during the returning of the capacity changing means to neutral, the orifices of the pistons are shut by the pressing member so as to shut the closed fluid circuit, so that the hydraulic pressure of either fluid passage is increased; in this case, the fluid pressure of the fluid passage which has been lower during accelerating or cruising operation becomes higher. Hence, providing of the IDS does not affect the generation of the "dynamic brake". Additionally, when the capacity changing means reaches the neutral position, the pressure fluid escapes from the orifices so as to reduce the fluid pressure within the closed fluid circuit suddenly, thereby freeing the hydraulic motor, whereby the axles becomes freely rotatable. Accordingly, in the case of deceleration in advancing, a driver leans forward until reaching neutral, and when reaching neutral, the deceleration force is suddenly lost, thereby making the driver bend backward. Thus, the posture of a driver is compulsively changed, thereby being uncomfortable.

On accelerating from the neutral position, the closed fluid circuit, which has been open for draining through the orifices in neutral, is closed by the pressing member suddenly, thereby being hydraulically pressured-up abruptly. Thus, the vehicle starts unexpectedly, thereby making the driver feel uncomfortable.

Furthermore, the IDS reduces the hydraulic pressure within the closed fluid circuit in neutral so as to enable the axles to run idle, thereby arising such a problem that the vehicle left on a slope, in the condition that the speed changing means is disposed in neutral and a brake for parking is not applied, occasionally descends by itself without notice.

Moreover, the hydraulic pressure, which presses the pistons against the pressing member, is unstable because of fluctuations thereof according to the change of temperature or the driving condition, thereby making the movement of the capacity changing means unstable.

Particularly, the reduction of the pressing force of the piston connected with a lower-pressured fluid passage (one of the pair of fluid passages must be hydraulically pressured lower than the other.) causes the unstable movement of the capacity changing means. Also, the rattle movement of the pistons generated by the fluctuations of the hydraulic pressure causes strange noise.

JP-10 009385A which comprises the features mentionned in the preamble of claim 1, discloses a hydrostatic transmission (HST) with the features of the preamble portion of claim 1 for driving an axle of a vehicle. The internal damping system of the HST comprises a shutting member which is provided with two vertical grooves which are formed and arranged such that two orifices connected to the fluid passages connecting the hydraulic pump and motor are communicated with the fluid sump only at the neutral position of the capacity changing means. This serves to avoid an abrupt stop when the capacity changing means is returned to the neutral position.

### Summary of the Invention

The main object of the invention is to provide a hydrostatic transmission (HST) for driving an axle, which can moderate a "dynamic brake shock" caused when a vehicle using a transaxle apparatus with the HST in travelling forward or backward (advancing or reversing) is decelerated by the neutral-returning function of the HST.

In this regard the present invention provides a hydrostatic transmission (HST) as defined in claim 1. Preferred embodiments are defined in the dependent claims.

The second aspect of the present invention is to provide an IDS for the same HST, which can moderate a shock generated on a vehicle employing the same hydrostatic transaxle apparatus when it starts advancing or reversing.

The third aspect of the present invention is to provide an IDS for the same HST, which can prevent the vehicle left on a slope in neutral without a parking brake from suddenly self-descending.

And assumed that the IDS includes pistons actuated by the hydraulic pressure in the closed fluid circuit for restraining the movement of the capacity changing means returning to the neutral position, the fourth object of the present invention is to improve such an IDS, so that the pressure forces of the pistons can be stable regardless of the change of hydraulic pressure in the closed fluid circuit.

The IDS for such an HST as the above-mentioned according to the present invention is provided with a pair of first orifices, which are open to respective fluid passages, and a shutting member interlocking 'with the above-mentioned capacity changing means and facing the openings of both the first orifices.

For a detailed structure of the IDS, a pair of pistons with the first orifices provided therethrough may be slidably fit to the fluid passages and the outer surfaces thereof may be pressed against .the shutting member by'the hydraulic pressure in the respective fluid passages. Also, a groove is formed in the shutting member, through which the first orifices can be connected with the fluid sump in relation to the position of the capacity changing means. According to such a structure, when the shutting means interlocking with the capacity changing means reaches a position where one or both of the first orifices are connected to the grooves, the orifices are open to the fluid sump.

If the IDS is so constructed as just above, the first orifices can be easily constituted by inserting the pistons into a center section of the HST in the condition that their outer surfaces are disposed outwardly from the center section so as to abut against the shutting member. Also, the amount of fluid drained through the first orifices can be easily changed only by replacing the pistons with those having different first orifices of different diameters. Thus, the IDS can be constructed so easily and cheaply. The groove for connecting the orifices with the fluid sump can be compactly made by the shutting member without requiring any other for providing it. The range for connect the opening of the orifice to the fluid sump can be easily adjusted by changing the position of the groove.

To attain the main and second objects by use of such an IDS as the above mentioned, the shutting member interlocks with the capacity changing means so that at least one of the first orifices is connected with the fluid sump when the capacity changing means is disposed at a predetermined position with in the acting range.

Due to such a construction, when the capacity changing means being at the predetermined position, fluid in the closed fluid circuit is escaped from at least one of the first orifices to the fluid sump. Particularly, if the first orifice connected with the higher-pressured fluid passage is connected with the fluid sump, the excessive hydraulic pressure in the higher-pressured fluid passage can be reduced, so that the difference between the both first passages is reduced as if they are neutral, and the whole of hydraulic pressure in the closed fluid circuit is reduced so as to lighten the hydraulic pressure load on the axles. Accordingly, the "dynamic brake" is reduced until the capacity changing means in the decelerating movement reaches the neutral position, thereby solving the problem that the hydraulic pressure in the closed fluid circuit is reduced as soon as the capacity changing means reaches the neutral position, which causes the insecurity of posture of the driver. Also, on acceleration from the neutral position, the HST can be prevented from sudden rising of hydraulic pressure, so that the vehicle can start smoothly.

In addition to such above construction, to attain the main object, the shutting member interlocking with the capacity changing means disconnects both of said first orifices from said fluid sump until said capacity changing means reaches a predetermined position in said acting range, and connects at least one of said first orifices, which is connected to a higher-pressured one of said pair of fluid passages, with said fluid sump while said capacity changing means moves from said predetermined position in said acting range to said neutral position.

Accordingly, during the decelerating movement of the capacity changing means until reaching the predetermined position, the fluid circuit of the HST is perfectly closed by both closed first orifices so as to generate a "dynamic brake" for effective deceleration, and while the capacity changing means moves from the predetermined position to the neutral position, the excessive hydraulic pressure in the higher-pressured fluid passage is reduced, so that the difference between the both first passages is reduced as if they are neutral, and the whole of hydraulic pressure in the closed fluid circuit is reduced so as to lighten the hydraulic pressure load on the axles. Due to such reduction of the "dynamic brake" before the neutral position, the problem that the hydraulic pressure in the closed fluid circuit is reduced as soon as the capacity changing means reaches the neutral position, which causes the insecurity of posture of the driver, can be solved.

Alternatively, the first orifice connected with the higher-pressured fluid passage may be connected with the fluid sump by the shutting member when the capacity changing means returns from any position in the acting range to the neutral position.

Accordingly, the first orifice connected with the higher-pressured fluid passage is connected with the fluid sump so as to reducing the "dynamic brake" as soon as the neutral-returning of the capacity changing means starts. Thus, in addition to the above mentioned effect of moderation on reaching the neutral position, the vehicle can be prevented from sudden braking shock on the start of deceleration from a high-speed stage.

Next, to attain the second aspect, the shutting member connects both of the first orifices with the fluid sump as soon as the capacity changing means leaves the neutral position, and disconnects the first orifice, which is connected with the higher-pressured fluid passage, from the fluid sump when the capacity changing means moves further away from the neutral position.

Accordingly, just on starting of advancing or reversing from neutral condition, the pressure fluid is drained through both of the first orifices, and after the vehicle speed is increased to a certain degree, it is drained through one of the first orifices, so that the sudden rising of hydraulic pressure in the closed fluid circuit is prevented, thereby moderating the starting shock of the vehicle.

Next, for a first construction of the shutting member to attain the aspect object, the shutting member partly connects each of the first orifices with the fluid sump when the capacity changing means is disposed at the neutral position.

Alternatively, for a second construction, the shutting member may disconnect one of the first orifices from the fluid sump when the capacity changing means is disposed at the neutral position. In this case, a second orifice may be provided for partly draining the operating fluid in the fluid passages to the fluid sump.

Alternatively, for a third construction, the first orifices may have extremely small diameters and the shutting member may entirely connect both of the first orifices with the fluid sump when the capacity changing means is disposed at the neutral position.

Due to any of the three constructions of the shutting member, the amount of fluid drained from the fluid passages of the closed fluid circuit, when the HST is neutral, is limited so as not to generate the self-rotation of the neutral axles when the vehicle being left on a slope without a parking brake, even at worst, thereby preventing the vehicle from unexpected self-descending thereof. Thus, the vehicle can be safely stopped on a slope.

Referring to the second construction employing the second orifice, if the amount of fluid drained through the second orifice is limited so as to avoid the above-mentioned problem, both of the first orifices can be shut when the capacity changing means being in neutral, in other words, the first orifices can be used only for draining fluid so as to moderate the "dynamic brake" when the capacity changing means being in the acting range. As a result, it becomes no use that the diameters of the first orifices and the construction of the shutting member is considered for solving the problem caused when the capacity changing means being in neutral, whereby the IDS can be easily constructed without serious accuracy.

According to the first and second constructions without such the second orifice, the amount of drained fluid can be limited by improvement of the first orifices and the shutting members conventionally provided for the IDS, thereby saving the number of parts and the cost for manufacturing the IDS.

Referring to the first construction, both of the first orifices can be manufactured without consideration of their diameters, however, only shutting member is so improved that the first orifices are partly connected with the fluid sump when the capacity changing means being in neutral. As a result, the IDS can be easily constructed without serious accuracy of the first orifices.

If the second construction can be provided without the second orifice, such that one of the first orifices is connected with the fluid sump when the capacity changing means being in neutral, the first orifices can be also easily manufactured without great accuracy of their diameters. It is preferable that the first orifice which can be easily connected with the fluid sump is selected so as to be connected with the fluid sump when the capacity changing means is in neutral, and the shutting member is preferably constructed on the basis of its selection, thereby simplifying the mechanism of connection between the first orifice and the fluid sump and the construction of the shutting member.

The third construction, if only both of the first orifices can be made with such extremely small diameters, the conventional shutting member which connects both of the first orifices with the fluid sump may be used when the capacity changing means being in neutral.

If any of the above various constructions for attaining the main object and second and third aspects are combined with another or others of them, there can be obtained one, two, or all of the three effects: the vehicle left on a slope in neutral can be prevented from unexpected self-descending; the shock on the decelerated vehicle stopping can be avoided; and the shock on the accelerated vehicle starting can be avoided.

Next, to attain the fourth aspect, the IDS is provided with the above-mentioned pair of pistons with the first orifices which can be pushed against the shutting member by the hydraulic pressure in the fluid passages, the shutting member is provided with the above-mentioned groove which can be connected with the first orifices, and a pair of second biasing means bias the respective pistons so as to press the outer surfaces of the pistons against the shutting member. Both biasing forces of the second biasing means and the hydraulic pressure force in the fluid passages for pushing the pistons amount smaller than the biasing force of the first biasing means.

The second biasing means bias the pistons for pressing the shutting member so as to stabilize the pressing force thereof, so that the piston, even if it is fit to the lower-pressured fluid passage, can be certainly pressed against the shutting member, thereby securing the neutral-returning speed of the capacity changing means all the times. The strange noise generated from the pistons reciprocally moved by the fluctuations of hydraulic pressure can be also avoided. Since the amount of the biasing forces of the second biasing means and the hydraulic pressure for pushing the pistons is smaller than the biasing force of the first biasing means, the second biasing means are prevented from interferring with the neutral-returning of the capacity changing means.

Additionally, the transaxle apparatus preferably comprises the housing containing the axles and the HST together with the fluid sump, so that the capacity changing means, the first biasing means and the shutting member provided on the HST can be also contained in the housing, whereby the apparatus, without additional parts, can be compacted. The mechanism for connection between the first orifices and the fluid sump through the shutting member in the housing can be simplified and easily obtained.

If the transaxle apparatus containing the axles and the HST employs the IDS comprising the pistons with the first orifices and the shutting member with the groove for connecting the first orifices to the fluid sump, the pistons may be contained together with the HST and the shutting member in the housing, thereby compacting the apparatus and simplifying the mechanism for connection between the fluid sump and the first orifices through the groove of the shutting member.

### Brief Description of Drawings

Fig. 1 is a plan view, partly in cross section, of a transaxle apparatus with an HST according to the present invention in condition that an upper housing part 1 has been removed therefrom;
Fig. 2 is a cross-sectional view looking in the direction of arrows I - I in Fig. 1, being provided with upper housing part 1;
Fig. 3 is a cross-sectional view looking in the direction of arrows II - II in Fig. 1, being provided with upper housing part 1;
Fig. 4 is a cross-sectional view of a principal part of the transaxle apparatus shown in Figs. 1 through 3 showing the disposition of upper and lower pistons 64U and 64L in a center section 5;
Fig. 5 is a perspective view of a preferred first embodiment of a control arm 39 which is suitable to center section 5 with pistons 64U and 64L;
Fig. 6 is a side view of the same in a neutral position N;
Fig. 7 is a view showing the same control arm 39 at various positions in series of its advancing range A;
Fig. 8 is a view showing the same control arm 39 at various positions in series of its reversing range R;
Fig. 9 is a hydraulic circuit diagram of an HST provided with center section 5 and control arm 39 according to the first embodiment shown in Figs. 6, 7, 11, 12, 14 and 15;
Fig. 10 is a schematic diagram showing opening conditions of orifices 80U and 80L in relation to the rotational positions of the preferred first embodiment of control arm 39 shown in Figs. 6 and 7;
Fig. 11 is a side view of a first modification of the first embodiment of control arm 39 in neutral position N;
Fig. 12 is a side view of a second modification of the first embodiment of control arm 39 in neutral position N;
Fig. 13 is a schematic diagram showing opening conditions of orifices 80U and 80L in relation to the rotational positions of the second modification of the first embodiment of control arm 39 shown in Fig. 12;
Fig. 14 is a side view of a third modification of the first embodiment of control arm 39 in neutral position N;
Fig. 15 is a side view of a fourth modification of the first embodiment of control arm 39 in neutral position N;
Fig. 16 is a schematic diagram showing opening conditions of orifices 80U and 80L in relation to the rotational positions of the third and fourth modifications of the first embodiment of control arm 39 shown in Figs. 14 and 15; Fig. 17 is a perspective view of a preferred second embodiment
of control arm 39 which is suitable to center section 5 with pistons 64U and 64L;
Fig. 18 is a hydraulic circuit diagram of an HST provided with center section 5 and control arm 39 according to the second embodiment shown in Figs. 17, 20 and 22;
Fig. 19 is a schematic diagram showing opening conditions of orifices 80U and 80L in relation to the rotational positions of the preferred second embodiment of control arm 39 shown in Fig. 17;
Fig. 20 is a side view of a first modification of the second embodiment of control arm 39 in neutral position N;
Fig. 21 is a schematic diagram showing opening conditions of orifices 80U and 80L in relation to the rotational positions of the first modification of the second embodiment of control arm 39' shown in Fig. 20;
Fig. 22 is a side view of a second modification of the second embodiment of control arm 39 in neutral position N;
Fig. 23 is a schematic diagram showing opening conditions of orifices 80U and 80L in relation to the rotational positions of the second modification of the second embodiment of control arm 39 shown in F i g. 22;
Fig. 24 is a side view of a preferred third embodiment of control arm 39 which is suitable to center section 5 with pistons 64U and 64L;
Fig. 25 is a hydraulic circuit diagram of an HST provided with center section 5 and control arm 39 according to the third embodiment shown in Figs 24, 27 and 29;
Fig. 26 is a schematic diagram showing opening conditions of orifices 80U and 80L in relation to the rotational positions of the preferred third embodiment of control arm 39 shown in Fig. 24;
Fig. 27 is a side view of a first modification of the third embodiment of control arm 39 in neutral position N;
Fig. 28 is a schematic diagram showing opening conditions of orifices 80U and 80L in relation to the rotational positions of the first modification of the third embodiment of control arm 39 shown in Fig. 27;
Fig. 29 is a side view of a second modification of the third embodiment of control arm 39 in neutral position N;
Fig. 30 is a schematic diagram showing opening conditions of orifices 80U and 80L in relation to the rotational positions of the second modification of the third embodiment of control arm 39 shown in Fig. 29;
Fig. 31 is a side view of a preferred fourth embodiment of control arm 39 which is suitable to center section 5 with pistons 64U and 64L;
Fig. 32 is a hydraulic circuit diagram of an HST provided with center section 5 and control arm 39 according to the fourth embodiment shown in Fig. 31, and
Fig. 33 is a schematic diagram showing opening conditions of orifices 80U and 80L in relation to the rotational positions of the preferred fourth embodiment of control arm 39 shown in Fig. 31.

### Detailed Description of the Preferred Embodiments

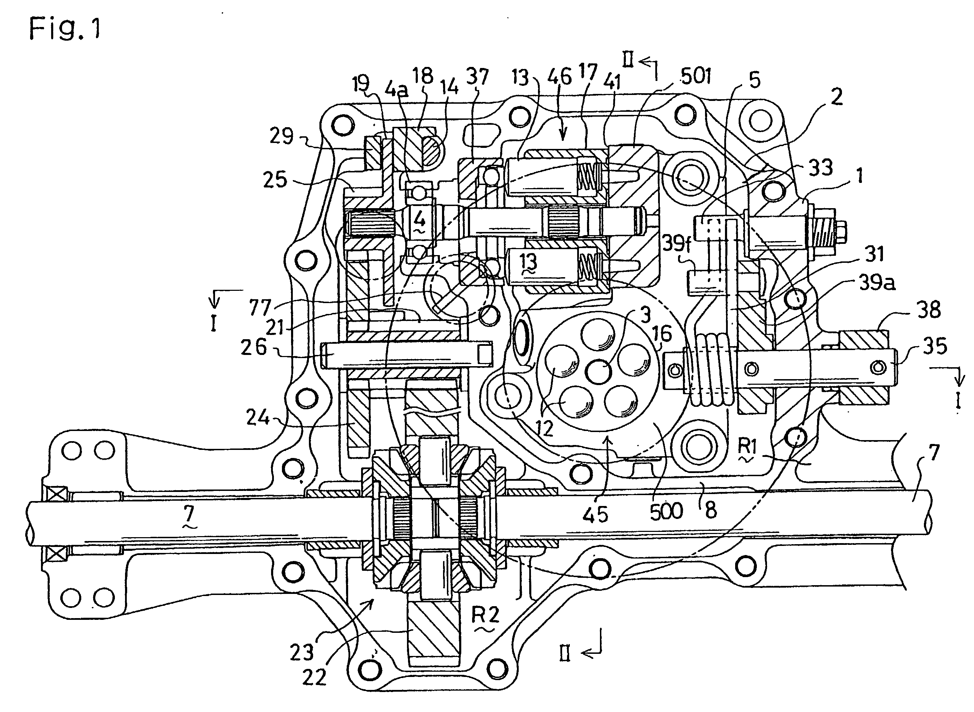

Explanation will be given on the entire structure of a transaxle apparatus with an HST employing the damping system for its neutral-returning of the present invention in accordance with Figs. 1 through 3. An apparatus housing consists of an upper housing 1 and a lower housing 2 joined at their horizontal joint surfaces with each other. A bearing portion for a motor shaft 4 is provided between upper and lower housings 1 and 2 on their joint surfaces. Bearing portions for left and right axles 7 are formed by upper housing 1 so as to be offset upwardly from its joint surface, so that axles 7 are rotatably supported by upper housing 1. Axles 7 are differentially connected with each other through a differential gear unit 23 in the apparatus housing and both outer ends of axles 7 project outwardly in lateral.

Regarding to the interior of the apparatus housing, a first chamber R1 and a second chamber R2 are divided by a partition 8. First chamber R1 contains an HST, and second chamber R2 contains a mechanical transmission between motor shaft 4 and differential gear unit 23, differential gear unit 23 and axles 7. Both chambers R1 and R2 are filled with common lubricating oil so as to be served as oil sump. In upper housing 1, there is a space serving as an air sump above differential gear unit 23, which is connected to an oil supplying portion (not shown) formed by upper housing 1, so that the transaxle apparatus can supplied with oil through the upper portion thereof.

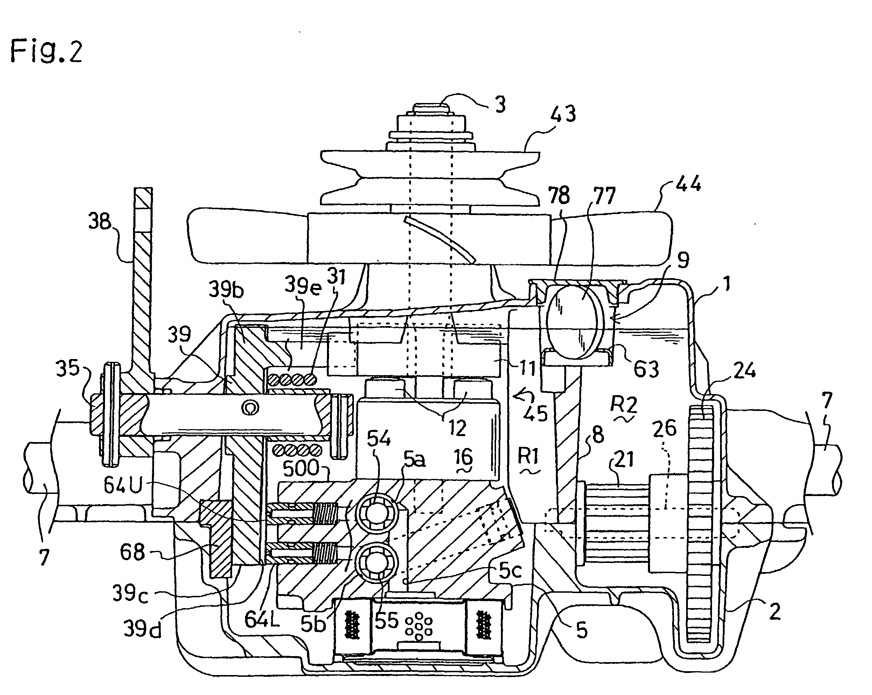

As shown in Fig. 2, the upper portion of partition 8 is cut off so as to make a communication chamber 9 for allowing the lubricating oil flow between first and second chambers R1 and R2. On the bottom of communication chamber 9, in other words, the top of partition 8 is mounted a seat 63. A discoid magnet 77 serving as an oil filter for removing impurities like metal fragments scraped out from rubbing gears is fixedly erected vertically on seat 63. Upper housing 1 is provided with an opening above communication chamber 9, through which magnet 77 and seat 63 can be attached therein and detached therefrom. The opening is covered with a lid 78.

The HST in first chamber R1 is disposed before left and right axles 7 in second chamber R2 in this embodiment. However, the transaxle apparatus may be disposed so as to locate axles 7 before the HST, corresponding to a kind of a vehicle.

Referring to the HST, a center section 5 forming therein a closed fluid circuit for fluidly connecting a hydraulic pump and a hydraulic motor with each other is removably disposed in first chamber R1 of upper housing 1. The extensional direction of center section 5 is oriented longitudinally, in other words, substantially in perpendicular to axles 7. A hydraulic pump 45 is mounted onto a pump mounting surface 40 formed at the top of a rear horizontally extensive portion 500 of center section 5. A hydraulic motor 46 is mounted onto a motor mounting surface 41 formed at a side surface of of a front vertically extensive portion 501. Accordingly, hydraulic pump 45 and hydraulic motor 46 are disposed before and behind in front of axles 7, so that the transaxle apparatus of this embodiment is laterally narrowed. Furthermore, since hydraulic motor 46 is disposed in opposite to axles 7 with respect to hydraulic pump 45, so that there can be served a space for a drive train including a counter shaft 26 discussed below between hydraulic motor 46 and differential gear unit 23.

A pump shaft 3 is vertically supported into the center of pump mounting surface 40, so as to extend through the space between hydraulic motor 46 and axles 7, and to project outwardly through the top wall of upper housing 1. The outwardly projecting portion of pump shaft 3 is provided therearound with an input pulley 43 having a cooling fan 44, so as to be designated as an input shaft.

A cylinder block 16 is rotatably and slidably mounted onto pump mounting surface 40. Pistons 12 are reciprocally inserted into a plurality of cylinder holes of cylinder block 16 through biasing springs, respectively. A thrust bearing 11a of a movable swash plate 11 serving as capacity changing means abuts against the heads of pistons 12. Movable swash plate 11 is provided along the central axis thereof with a through-hole 11b, through which pump shaft 3 is allowed to pass. Pump shaft 3 combined with an input shaft is disposed along the rotational axis of cylinder block 16 while engaging therewith so as not to be relatively rotatable. Hence, resultant hydraulic pump 45 is of an axial piston type.

A surface of movable swash plate 11 contacting with pistons 12 is slantingly operated to an optional degree from a horizontally extensive position with respect to the rotational axis of cylinder block 16, so that the amount and direction of oil discharged from hydraulic pump 45 can be changed. The back surface of swash plate 11 is provided with an arcuate convex, and on the other hand, the inner surface of the upper portion of upper housing 1 is provided with an arcuate concave in correspondence to the convex of swash plate 11. Due to such a structure, movable swash plate 11 of a cradle type slantingly slides along the arcuate concave of upper housing 1.

A cylinder block 17 is rotatably supported onto motor mounting surface 41. A plurality of pistons 13 are reciprocally inserted into a plurality of cylinder holes of cylinder block 17 through biasing springs, respectively. The heads of pistons 13 abut against a fixed swash plate 37 fixedly sandwitched between upper housing 1 and lower housing 2. Motor shaft 4 is disposed horizontally along the rotational axis of cylinder block 17 while engaging with cylinder block 17 so as not to be relatively rotatable, thereby constituting hydraulic motor 46. Motor shaft 4 is rotatably inserted into a horizontal bearing hole formed in a vertically extensive portion 501 of center section 5 through a sealed bearing 4a retained between upper housing 1 and lower housing 2. The structure of the closed fluid circuit of center section 5 and the capacity changing means of hydraulic pump 45 (including movable swash plate 11) will be detailed later. Explanation will now be given on the arrangement of the drive train between motor shaft 4 and differential gear unit 23 in second chamber R2 and a braking device.

As shown in Fig. 1, second chamber R2 consists of a lateral long axle housing portion and a drive train housing portion. The axle housing portion is formed behind first chamber R1 and the drive train housing portion is formed on one side (regarding to this embodiment, .when viewing forward, on the left side) of first chamber R1. Differential gear unit 23 is disposed at the joining portion between the axle housing portion and the drive train housing portion.

Referring to the drive train between motor shaft 4 and differential gear unit 23, motor shaft 4 projects from first chamber R1 into the drive train housing portion of second chamber R2, so as to be fixedly provided therearound with a gear 25. Counter shaft 26 laterally crosses the drive train housing portion. On the joint surfaces of upper and lower housings 1 and 2, one end of counter shaft 26 is journalled by a side wall of the apparatus housing, and the other end thereof by a partition 8. On counter shaft 26 are provided a diametrically large gear 24, which always engages with gear 25, and a diametrically small gear 21, which can be rotated integrally with gear 24 and always engages with a ring gear 22 of differential gear unit 23. The output rotation of motor shaft 4 is transmitted to axles 7 through a speed reduction gear train consisting of gears 24, 21 and 22 and differential gear unit 23.

Explanation will be given on a braking device for braking motor shaft 4. A brake disk 19 formed integrally with gear 25 is fixed onto the utmost end of motor shaft 4 disposed in second chamber R2. A brake pad 29 is disposed between the upper portion of the front surface of brake disk 19 and the inner side surface of upper housing 1. In the space enclosed by brake disk 19 and partition 8, which is opposite to brake pad 29 with respect to brake disk 19 (on the right side of brake disk 19), are arranged a pressing member 18 and a brake operating shaft 14 for moving the pressing member toward brake disk 19.

Brake operating shaft 14 is rotatably supported vertically by upper and lower housings 1 and 2. The top. end of brake operating shaft 14 projects upwardly from the apparatus housing, so as to be fixedly provided with a brake arm (not shown). In the apparatus housing, brake operating shaft 14 is flatly cut off at its intermediate outer surface so as to be D-like shaped when viewed in plan. Pressing member 18 abuts against the cut-off surface of brake operating shaft 14, so as to be restricted in its lateral movement. The front and rear surfaces of pressing member 18 are guided along the inner surface of upper housing 1, so that pressing member 18 is only laterally slidable. Accordingly, when the brake arm is operated for braking, brake operating shaft 14 is rotated so that the edge of the cut-off surface of shaft 14 pushes the back surface of pressing member 18, so as to press brake disk 19 between brake pad 29 and pressing member 18, thereby braking motor shaft 4.

The general structures of various component elements contained in first and second chambers R1 and R2 of the apparatus housing consisting of upper and lower housings 1 and 2 has been described as the above. Detailed description will next be given on the closed fluid circuit in center section 5 of the HST, the.capacity changing means for hydraulic pump 45, and the neutral-returning damping system of the present invention in accordance with Figs. 1 through 6.

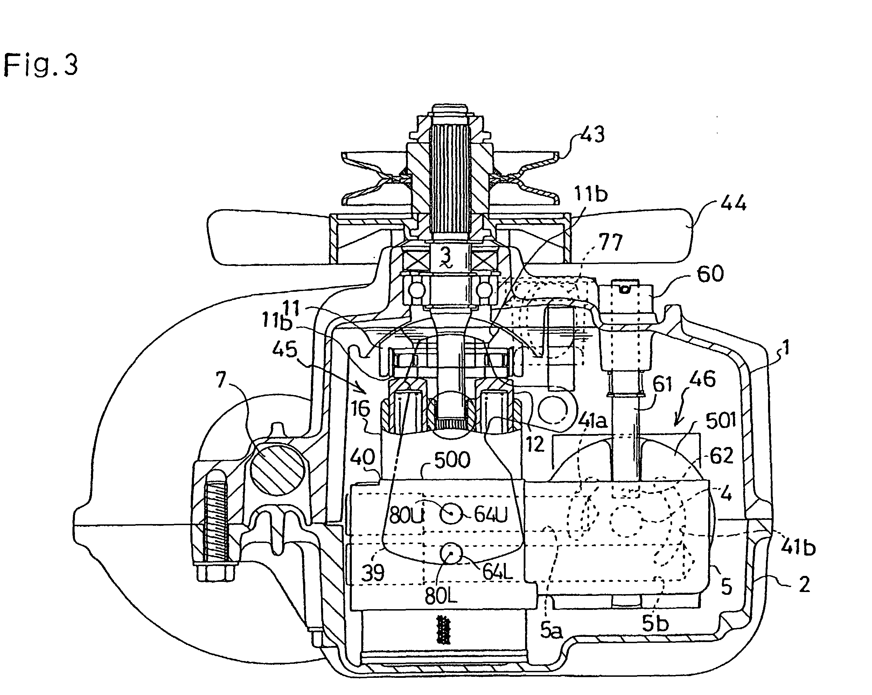

A pair of kidney ports (not shown) are open at pump mounting surface 40 on horizontally extensive portion 500 of center section 5, so as to introduce/discharge oil into/from cylinder block 16. As shown in Fig. 3, a pair of kidney ports 41a and 41b are open at motor surface 41 of vertically extensive portion 501, so as to discharge/introduce oil from/into cylinder block 17.

In horizontally extensive portion 500 of center section 5 are substantially horizontally bored a first oil passage 5a and a second oil passage 5b, which are arranged parallely in a vertical row, so as to be fluidly connected to respective kidney ports 41a and 41b, thereby constructing a closed fluid circuit as a fluid-connection between the kidney ports at pump mounting surface 40 and kidney ports 41a and 41b at motor mounting surface 41. Thus, the operating oil is circulated between hydraulic pump 45 and hydraulic motor 46. The direction of oil flowing through oil passages 5a and 5b is turned by the turning of movable swash plate 11 between its advancing range and reversing range. To be detailed, when the vehicle advances, for example, if oil is introduced into cylinder block 17 through kidney port 41a. kidney port 41a is designated as a suction port of hydraulic motor 46 and kidney port 41b as a discharge port thereof, and all this while, one kidney port at pump mounting surface 40 connected with kidney port 41a through first oil passage 5a is designated as a discharge port of hydraulic pump 45 and the other as a suction port thereof. When the vehicle reverses, the suction and discharge ports of hydraulic pump 45 and motor 46 are exchanged with each other.

In center section 5, oil passages 5e and 5f horizontally branch in a vertical row from oil passages 5a and 5b, respectively, and are plugged at the outward open ends thereof with an upper piston 64U and a lower piston 64L, respectively. Upper piston 64U is bored through by an upper orifice 80U connected with oil passage 5e, and lower piston 64L by a lower orifice 80L connected with oil passage 5f. The pressure oil in the closed fluid circuit can be introduced (drained) into the oil sump in the apparatus housing through orifices (according to the present invention, first orifices) 80U and 80L. For the purpose of moderating the dynamic braking shock in deceleration and the accelerating shock on starting for advancing and reversing travel are provided pistons 64U and 64L constituting an IDS, which are mainly pressed against a later-described contact plate 39c so as to restrain the speed of a later-described capacity changing means returning to a neutral position, and are secondly operated so as to drain the pressure oil from the closed fluid circuit through their orifices 80U and 80L.

Seals 66 are interposed between the outer peripheral surfaces of pistons 64U and 64L and the inner wall surfaces of cylindrical portions 5h of center section 5. Coiled springs (according to the present invention, second biasing means) 79 are interposed between the inner ends of pistons 64U and 64L and the recessed end of cylindrical portion 5h, so as to bias pistons 64U and 64L outwardly. As a result, pistons 64U and 64L are pushed by the hydraulic pressure in oil passages 5a and 5b (5e and 5f) and the biasing forces of coiled springs 79. The hydraulic pressure generated from the closed fluid circuit and the biasing forces of the coiled springs 79 amount smaller than the biasing force of coiled and twisted neutral-returning spring 31 wound around a control shaft of the capacity changing means discussed below.

Additionally, for the purpose that axles 7 are allowed to be freely rotatable when the vehicle is hauled, a by-pass operating lever 60 is disposed above upper housing 1 so as to make first and second oil passages 5a and 5b open to the oil sump. In this regard, as shown in Fig. 3, the basic end of of by-pass operating lever 60 is fixed onto the top end of a vertical by-pass lever shaft 61 journalled by the upper wall of upper housing 1. By-pass lever shaft 61 is extended downwardly so that the bottom end thereof is disposed within vertically extensive portion 501 of center section 5. In vertically extensive portion 501 is disposed an internal end surface of cylinder block 17 slidably and rotatably contacting motor mounting surface 41, and also is disposed a thrust pin 62 whose end surface abuts against a flat surface formed by a cut-off side of the bottom portion of by-pass lever shaft 61.

Due to such a construction, when a driver operates by-pass operating lever 60 provided outside the apparatus housing for the traction of the vehicle, by-pass lever shaft 61 is rotated so as to make the bottom flat surface thereof slant, thereby pushing thrust pin 62 into between the contacting surfaces of cylinder block 17 and center section 5, so that cylinder block 17 is spaced from motor mounting surface 41. Thus, first oil passages 5a and 5b communicate with the oil sump in the apparatus housing through kidney ports 41a and 41b, so that motor shaft 4 is allowed to be freely rotatable.

Furthermore, as shown in Fig. 2, for the purpose that the operating oil drained by connection of orifices 80U and 80L, the operation of by-pass operating lever 60 and the like is recovered into the closed fluid circuit, check valves 54 and 55 are disposed in the outwardly opening end portions of extensions of first passages 5a and 5b. The primary ports of check valves 54 and 55 are connected together to an oil inlet port 5c which is open at the bottom surface of center section 5. Check valve are automatically opened by the difference of hydraulic pressure between the closed fluid circuit and the oil sump so as to supply the closed fluid circuit with operating oil from the oil sump.

Explanation will next be given on the capacity changing means, which is operated so as to change the angle of inclination of movable swash plate 11 for changing the amount and direction of operating oil from hydraulic pump 45. As shown in Figs. 1 and 2, a control shaft 35 in parallel to axles 7 is rotatably supported by the right side wall of upper housing 1 which is opposite to the drive train for transmitting power to differential gear unit 23. Control shaft 35 is extended outwardly from upper housing 1. A control lever 38 is provided on the outer projecting end portion of control shaft 35. Control arm 39 is provided on the inner end portion of control shaft 35. Control arm 39 consists of a first arm 39a, a second arm 39b, both of which are radically extended from the axis of control shaft 35, and a sectorial contact plate 39c serving as a shutting member against pistons 64U and 64L.

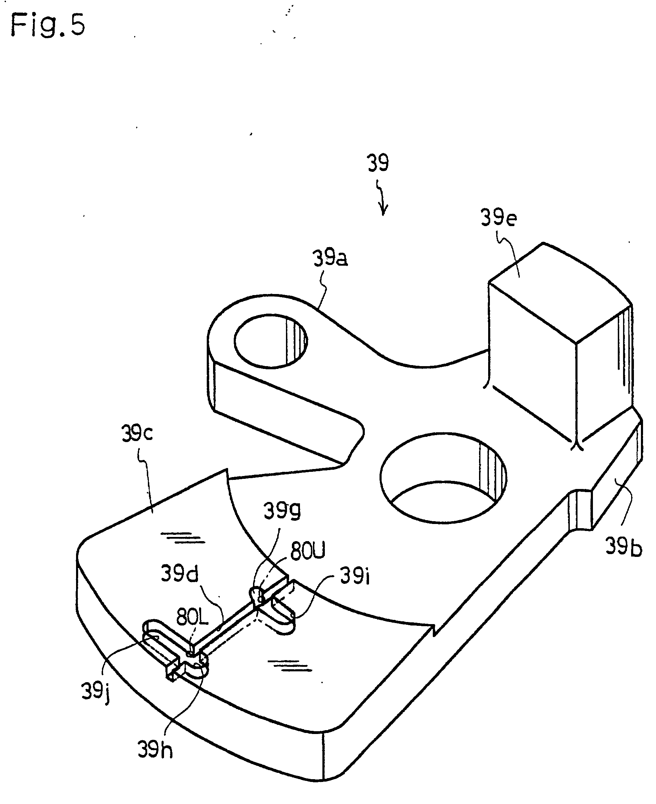

As shown in Fig. 5, second arm 39b is provided at the utmost end thereof with a projection 39e. Control shaft 35 is disposed so as to constitute the center axis for swinging of movable swash plate 11, and then, projection 39e is directly inserted into a recessed portion formed by a side surface of movable swash plate 11. Control lever 38 interlocks with a speed changing means like a lever or a pedal (not shown) provided on a vehicle through a linkage (not shown).

Due to the above-mentioned capacity changing means comprising movable swash plate 11, control shaft 35, second arm 39b of control arm 39 and the like, when control lever 38 is rotated in the longitudinal direction about the vehicle, control arm 39 is rotated in the longitudinal direction around control shaft 35 so as to swing movable swash plate 11, thereby changing the amount and direction of oil discharged from hydraulic pump 45.

Referring to the biasing means for returning the capacity changing means to the neutral position (the first biasing means of the present invention), an engaging pin 39f projects from the utmost end of first arm 39a, as shown in Fig. 1, and a twisted spring 31 engages with the periphery of control shaft 35 in the apparatus housing. The both ends of twisted spring 31 cross each other and are extended toward first arm 39a so as to sandwitch eccentric shaft 33, which is provided onto the inner side wall of upper housing 1 close to control shaft 35, and engaging pin 39f therebetween.

Accordingly, when control lever 38 is rotated for speed changing operation so as to rotate control arm 39, one end of twisted spring 31 is moved away from the other end by engaging pin 39f, however, the other end is held by eccentric shaft 33, thereby biasing control lever 38 toward the neutral position. When, the operating force onto the speed changing means is released, a restoring force generated on the one end of twisted spring 31 makes engaging pin 39f return toward eccentric shaft 33 so as to hold control arm 38 in the neutral position demarcated by eccentric shaft 33. The extension of eccentric shaft 33 outside of the apparatus housing creates an adjusting screw, through which eccentric shaft 33 can be optionally shifted. Control arm 39 is rotated around control shaft 35 through twisted spring 31 by the shift of eccentric shaft 33, so that movable swash plate 11 can be adjusted to be in an accurate neutral position.

Contact plate 39c is extended close to the vertical surface of horizontally extensive portion 500 of center section 5, and is sectorial centering the axis of control shaft 35 so as to abut against pistons 64U and 64L wherever it is positioned between the furthest advancing position and the furthest reversing position through the neutral position. In other words, contact plate 39c constitutes a shutting member for opening/shutting of orifices 80U and 80L. Contact plate 39c may be apart from control arm 39 if only it rotationally follows control arm 39.

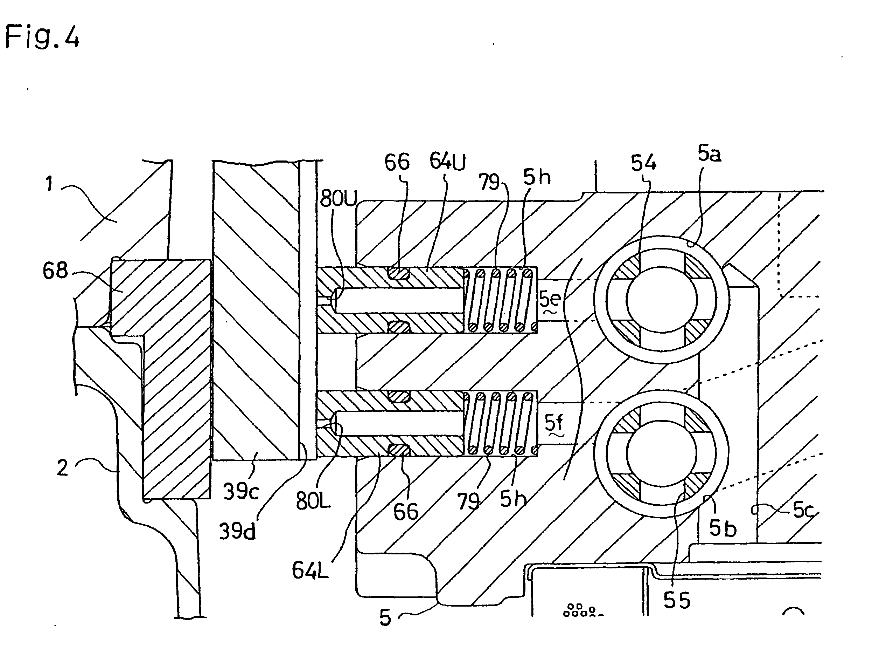

As shown in Figs. 2 and 4, in the apparatus housing, a friction plate 68 is disposed in opposite to pistons 64U and 64L with respect to contact plate 39c and is clamped by upper housing 1 and lower housing 2. Friction plate 68 abuts against the surface of contact plate 39c in opposite to pistons 64U and 64L, so that contact plate 39c is sandwitched between pistons 64U and 64L and friction plate 68. The existence of friction plate 68 enables the thrusting forces of pistons 64U and 64L to be applied onto contact plate 39c effectively. When control arm 39 with contact plate 39c is rotated, there is friction generated between contact plate 39c and friction plate 68, so as to restrain the rotational speed thereof.

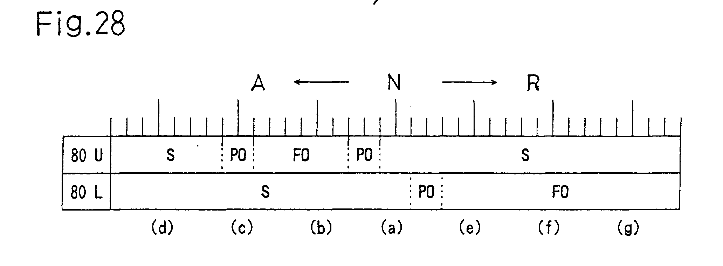

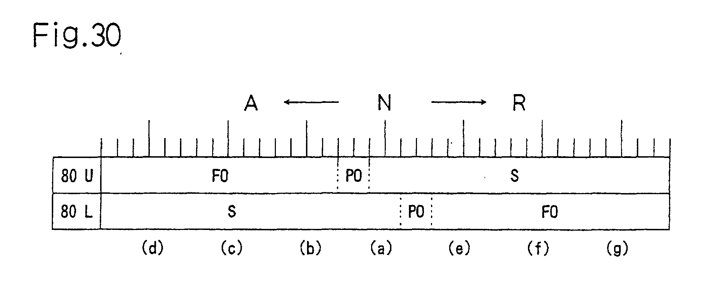

Next, referring to Figs. 5 through 33, explanation will be given on various embodiments and modifications regarding to control arm 39 with contact plate 39c suiting pistons 64U and 64L fitted in center section 5 applied in the hydrostatic transaxle apparatus shown in Figs. 1 through 4.

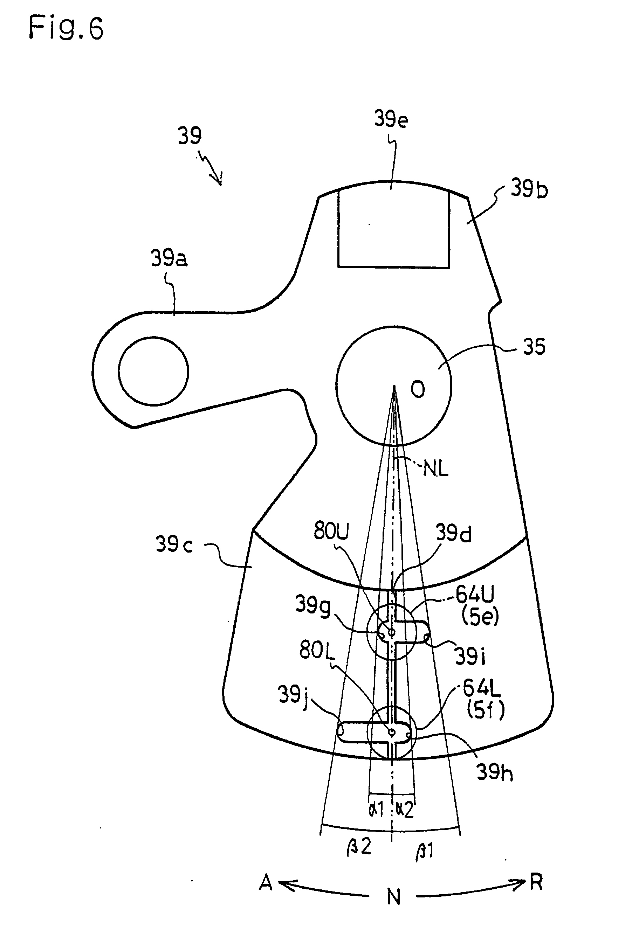

At first, referring to control arm 39 shown in Figs. 5 and 6 as a preferred first embodiment thereof, contact plate 39c is provided at the surface thereof facing pistons 64U and 64L with a vertical groove 39d. Vertical groove 39d has a width which is larger than the diameters of orifices 80U and 80L. When control arm 39 is positioned in neutral, orifices 80U and 80L are in communication with vertical groove 39d, so that oil within the closed fluid circuit is released from orifices 80U and 80L through vertical groove 39d into the oil sump formed in the housing of the hydrostatic transaxle apparatus. Thus, even if an error with respect to the neutral positioning of movable swash plate 11 is occurred so that the closed fluid circuit is wrongly supplied with oil by hydraulic pump 45, hydraulic motor 46 is prevented from wrong slight rotation.

When the vehicle is left on a slope or slanted ground when the HST is in neutral and axles 7 are not locked for parking, the weight of vehicle is applied on axles 7 so as to rotate them in the descending direction. Then, the load on axles 7 generates a back-pressure in the closed circuit through hydraulic motor 46. In this case, if the inner oil of the closed circuit is drained through wide-open orifices 80U and 80L and vertical groove 39d into the oil sump, such reduced hydraulic pressure cannot hold hydraulic motor 46, whereby hydraulic motor 46 freely follows the rotation of axles 7 and the vehicle descends the slope. However, each of orifices 80U and 80L of this embodiment is made smaller with its diameter than conventional one, whereby the oil cannot be drained therefrom perfectly. Hence, hydraulic motor 46 is held by the increased hydraulic pressure against the rotational force of axles 7 generated by the weight of vehicle, thereby enabling the vehicle to stay.

As shown in Figs. 5 and 6, contact plate 39c is provided with upper and lower first transverse grooves 39g and 39h and upper and lower second transverse grooves 39i and 39j branching transversely from vertical groove 39d.

The relation of arrangement between first and second oil passages 5a and 5b may be reversed. However, this embodiment and others hereinafter will be described on the premise that first oil passage 5a is disposed above second oil passage 5b. It will be understood that in the rotational range of control arm 39 for advancing, first oil passage 5a is lower-pressured and second oil passage 5b is higher-pressured during acceleration, however, first oil passage 5a becomes pressured higher than second oil passage 5b because of back-pressure occurred by the rotation of hydraulic motor 46 following the rotation of axles 7 during deceleration by the returning of control arm 39 to neutral. Similarly, in the rotational range of control arm 39 for reversing, second oil passage 5b, which is lower-pressured during acceleration, becomes pressured higher than first oil passage 5a during the returning of control arm 39 to neutral.

For this embodiment, upper first transverse groove 39g having a slight range is disposed so as to communicate with upper orifice 80U of upper piston 64U connected to first oil passage 5a when control arm 39 is positioned in its rotational range for reversing (hereinafter, reversing range R). Lower first transverse groove 39h having a slight range is disposed so as to communicate with lower orifice 80L of lower piston 64L connected to second oil passage 5b when control arm 39 is positioned in its rotational range for advancing (hereinafter, advancing range A). An angle a 1 which the center line of the width of vertical groove 39d passing center O of control shaft 35 (when control arm 39 is in neutral position N, the center line is common with a neutral line NL passing center O and centers of orifices 80U and 80L) forms with the line passing the utmost end of upper first transverse groove 39g and center O is as large as an angle α2 which the same center line forms with the line passing the utmost end of lower first transverse groove 39h and center O.

Angles α1 and α2 may be different. They can be optionally determined so as to enable the advancing and reversing vehicle to start without a shock.

On the start of advancing, the increase of hydraulic pressure of the closed fluid circuit within center section 5 is slightly delayed because higher-pressured second oil passage 5b is in communication with lower first transverse groove 39h through lower orifice 80L, and after control arm 39 is rotated so that lower orifice 80L passes the end of lower first transverse groove 39h, the amount of oil supplied to hydraulic motor 46 by hydraulic pump 45 is increased so much as to enable the vehicle to start. On the start of reversing, similarly, the hydraulic pressure within the closed fluid circuit reaches the degree capable of driving hydraulic motor 46 after control arm 39 is rotated so as to let upper orifice 80U pass the end of upper first transverse groove 39g. Thus, the starts of advancing and reversing are comfortably moderated.

Upper second transverse groove 39i having the predetermined range is disposed so as to communicate with upper orifice 80U of upper piston 64U connected to first oil passage 5a when control arm 39 is positioned in its advancing range A. Lower second transverse groove 39j having the predetermined range is disposed so as to communicate with lower orifice 80L of lower piston 64L connected to second oil passage 5b when control arm 39 is positioned in its reversing range R. An angle of β1 which the center line of vertical groove 39d passing center O of control shaft 35 forms with the line passing the utmost end of upper second transverse groove 39i and center O is as large as an angle β2 which the same center line forms with the line passing the utmost end of lower second transverse groove 39j and center O.

Angles β1 and β2 may be different. They can be optionally determined so as to enable the advancing and reversing vehicle to stop without a braking shock.

When a speed changing member on the vehicle is released by a driver during advancing or reversing of the vehicle, control arm 39 returns to neutral by biasing of neutral return spring 31. In case of the absence of second transverse grooves 39i and 39j so far, until control arm 39 reaches its neutral position, a "dynamic brake" regarded as an engine brake is applied so as to decelerate the vehicle rapidly. When reaching the neutral position, the pressure oil in the closed fluid circuit is drained from both of orifices 80U and 80L to the oil sump through vertical groove 39d, whereby the hydraulic pressure is reduced suddenly so that hydraulic motor 46 is made freely rotatable and axles 7 run idle. Accordingly, in case of deceleration in advancing, an operator leans forward until reaching neutral, and when reaching neutral, the decelerating force is suddenly lost, thereby making the operator bend backward. Thus, the operator is forced to change his/her posture greatly, and it will make him/her very uncomfortable.

In case of employing the above constructed contact plate 39c having second transverse grooves 39i and 39j, when the speed changing member is released during advancing (or reversing), the increased pressure oil in one of oil passages 5a(5b), which is pressured higher by back-pressure generated from self-rotating of hydraulic motor 46 while it is set to be lower-pressured by movable swash plate 11, is drained from corresponding orifice 80U(80L) to the oil sump through corresponding second transverse grooves 39i(39j) for a short time before returning control arm 39 reaches its neutral position N. Hence, the back pressure in the closed circuit is reduced until it reaches the peak thereof, and thereby enabling the vehicle to stop smoothly.

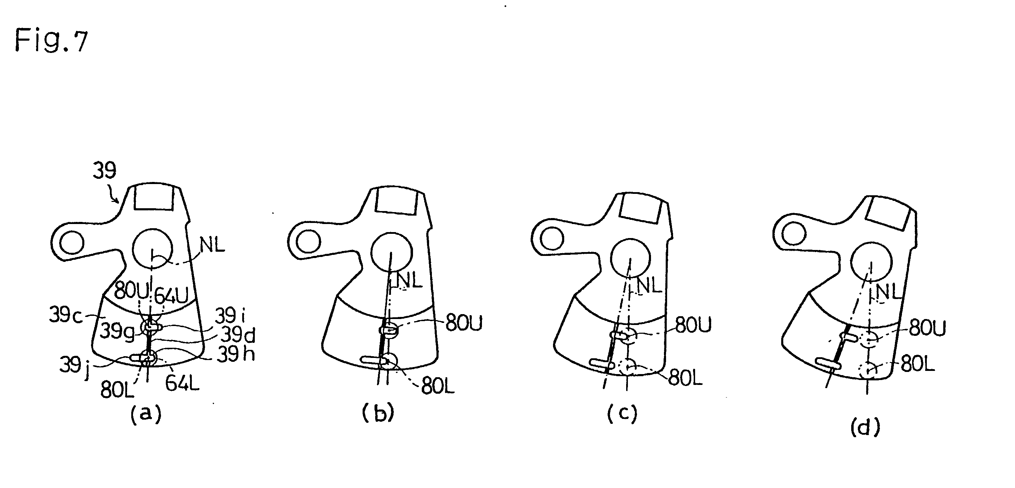

The hydraulic action and its effect on the movement of vehicle in relation to the whole rotational positions of control arm 39 will be described according to Figs. 7, 8 and 10.

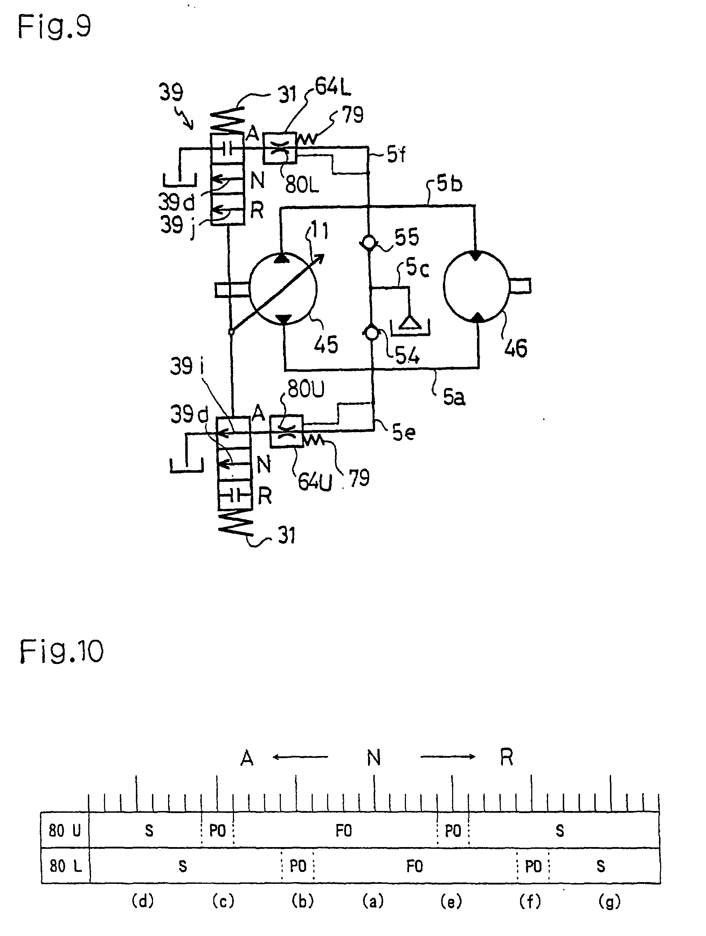

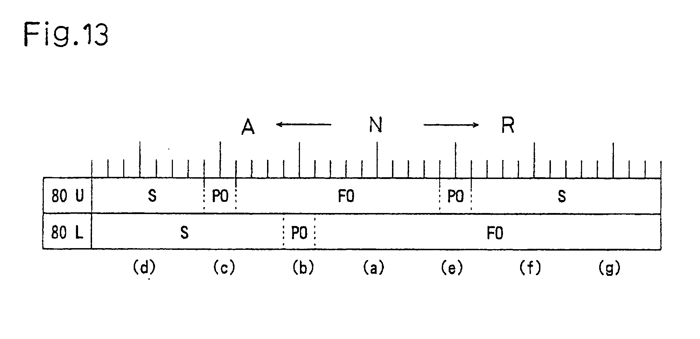

In Fig. 10, "FO" designates the condition that orifice 80U or 80L is fully open toward the oil sump when it is located in one of grooves 39d, 39g, 39h, 39i and 39j. "PO" designates that orifice 80U or 80L is partly open toward the oil sump when it is put on the end of one of first and second transverse grooves 39g, 39h, 39i and 39j so as to be partly shut by contact plate 39c. And "S" designates that orifice 80U or 80L is completely shut by contact plate 39c. The same designations are used in Figs. 13, 16, 19, 21, 23, 26, 28, 30 and 33.

The attitudes of control arm 39 in the rotational movement thereof marked as (a)-(g) shown in Fig. 7, 8 and 10 will be employed in similarly in all embodiments of control arm 39 hereinafter.

Referring to Figs. 7 and 10, the hydraulic action and its effect on the movement of vehicle in the advancing range A of control arm 39 will be described.

When a driver operates the speed changing member provided on the vehicle for acceleration in advancing so as to rotate control lever 38 of the transaxle apparatus from its neutral position into its advancing range, control arm 39 is rotated together with control lever 38 and control shaft 35 so as to change its position from (a) to (d) through (b) and (c) in Fig. 7.

During the rotation of control arm 39, movable swash plate 11 of hydraulic pump 45 is shifted so as to accelerate the advancing rotation of hydraulic motor 46 with motor shaft 4, thereby accelerating the advancing rotation of of axles 7. Higher-pressured second oil passage 5b is back-pressured further in proportion to the load applied on axles 7, thereby making lower piston 64L slide outwardly and press against contact plate 39c. The friction force between friction plate 68 and contact plate 39c pressed against it through lower piston 64L by the maximum hydraulic pressure and the biasing force of coiled spring 79 is set to be smaller than the biasing force of neutral return spring 31, so that control arm 39c automatically returns to neutral when releasing the speed changing member. For acceleration of the advancing speed, an operator must apply an operating force, which exceeds the amount of such friction force and the biasing force of neutral return spring 31, onto the speed changing member.

At the position (a), both of orifices 80U and 80L are in communication with vertical groove 39d. so that even if hydraulic pump 45 wrongly discharges oil into the closed circuit by an error of connecting means or linkage so as to apply hydraulic pressure to either oil passage 5a or 5b higher than the predetermined, the increased pressure oil therein is drained to the oil sump through either of orifices 80U and 80L. Also, when the vehicle is left in neutral on a slope so that hydraulic motor 46 is wrongly driven so as to apply back-pressure to either oil passage 5a or 5b, the increased pressure oil therein cannot be drained perfectly therefrom because orifices 80U and 80L have such small diameters as described above, thereby preventing the vehicle from suddenly descending the slope.

During the rotation of control arm 39 from the position (a) to the position (b), second oil passage 5b is essentially higher-pressured slightly by hydraulic pump 45, however, it is the fact that the hydraulic pressure therein tends to become higher than the predetermined base on the position of movable swash plate 11 because of the load of staying axles 7 thereby causing the vehicle to start suddenly. According to this embodiment, lower orifice 80L enters lower first transverse groove 39h, so that part of pressure oil in second oil passage 5b by the back-pressure is drained, thereby damping the starting shock. In addition, upper orifice 80U in communication with lower-pressured first oil passage 5a enters upper second transverse groove 39i.

When passing the position (c), lower orifice 80L passes the end of lower first transverse groove 39h, so that lower piston 64L pushes contact plate 39c to shut lower orifice 80L, whereby higher-pressured second oil passage 5b is increased in its hydraulic pressure. However, upper orifice 80U is still open to second transverse groove 39i.

When reaching the position (d), upper orifice 80U also passes the end of upper second transverse groove 39i so as to be shut by contact plate 39c, thereby enabling the entire capacity of the HST to perform advancing acceleration. In this state, contact plate 39c is slidably rotated against friction plate 68, thereby preventing control arm 39 from rapid rotation. Hence, the vehicle is prevented from a rapid acceleration.

In case that an operator releases the operating force applied on the speed changing member during advancing so as to automatically rotate control arm 39 from the position (d) to the position (a) through the positions (c) and (b), in other words, in case of returning to neutral, the rotation of axles 7, whose force exceeds that of motor shaft 4, drives hydraulic motor 46 so as to function as a hydraulic pump, whereby lower-pressured first oil passage 5a is changed to be pressured higher than second oil passage 5b. In this condition, after control arm 39 passes the position (c), the excessive pressure oil in first oil passage 5a is drained through upper orifice 80U and upper second transverse groove 39i, thereby preventing the vehicle from sudden deceleration. Thus, the vehicle is moderated in its deceleration and stopping.

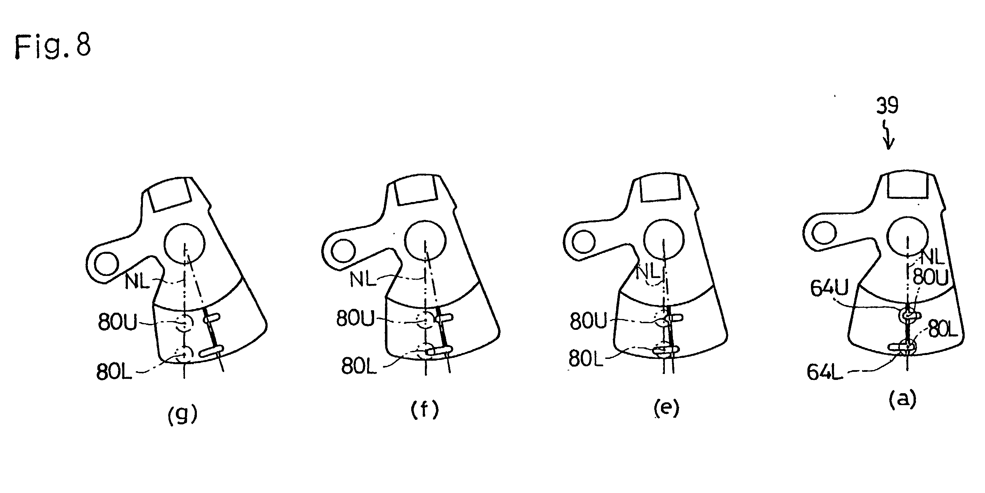

Referring to Figs. 8 and 10, the hydraulic action and its effect on the movement of vehicle in the reversing range R of control arm 39 will be described. In case of reversing acceleration from neutral, an operator shifts the speed changing member so as to rotate control arm 39 from the position (a) to the position (g) through the positions (e) and (f). On starting, control arm 39 is positioned at the position (e), part of oil in higher-pressured first oil passage 5a, which is increased by hydraulic pump 45 and the load of axles 7, is drained through upper orifice 80U and first transverse groove 39g, thereby preventing the vehicle from sudden start. In case of reversing deceleration by releasing the speed changing member so as to rotate control arm 39 by biasing of neutral return spring 31 from the position (g) to the position (a) through the positions (f) and (e), lower orifice 80L enters lower second transverse groove 39j after control arm 39 passes the position (f), so that the excessive pressure oil in second oil passage 5b, which is pressured higher by the rotational force of axles 7, is drained, thereby preventing the vehicle from sudden deceleration and rapid stopping.

The first embodiment of control arm 39 (including the following modifications thereof) comprising contact plate 39c, vertical grooves 39d and second transverse grooves 39i and 39j between the position (c) and the position (f) through the position (a) as neutral position N constitutes the valves shown in Fig. 9 which control the oil releasing of orifices 80U and 80L. In Fig. 9, first transverse grooves 39g and 39h are out of consideration. The orifice opening and closing action of control arm 39 is controlled together with movable swash plate 11 of hydraulic pump 45 by operation of speed changing member and biasing of neutral return spring 31. According to the opening and closing action, both upper and lower orifices 80U and 80L are fully open to the oil sump at neutral position N. In advancing range A, upper orifice 80U is opened to drain the pressure oil from first oil passage 5a and lower orifice 80L is closed. In reversing range R, lower orifice 80L is opened to drain the pressure oil from second oil passage 5b and upper orifice 80U is closed.

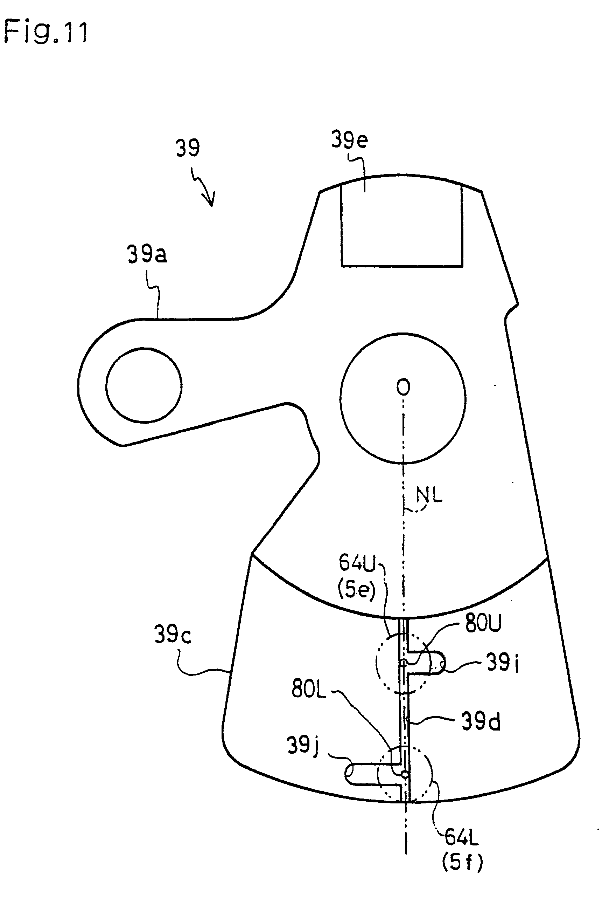

Next, various modifications of the first embodiment of control arm 39 as shown in Figs. 5 and 6 will be described according to Figs. 11 through 16.

A first modification thereof shown in Fig. 11, in which first transverse grooves 39g and 39h are eliminated, is adapted to such case that the damping of starting shock does not have to be considered. In Fig. 10, "PO" of upper orifice 80U in the position (e) and lower orifice 80L in the position (b) are changed into "S".

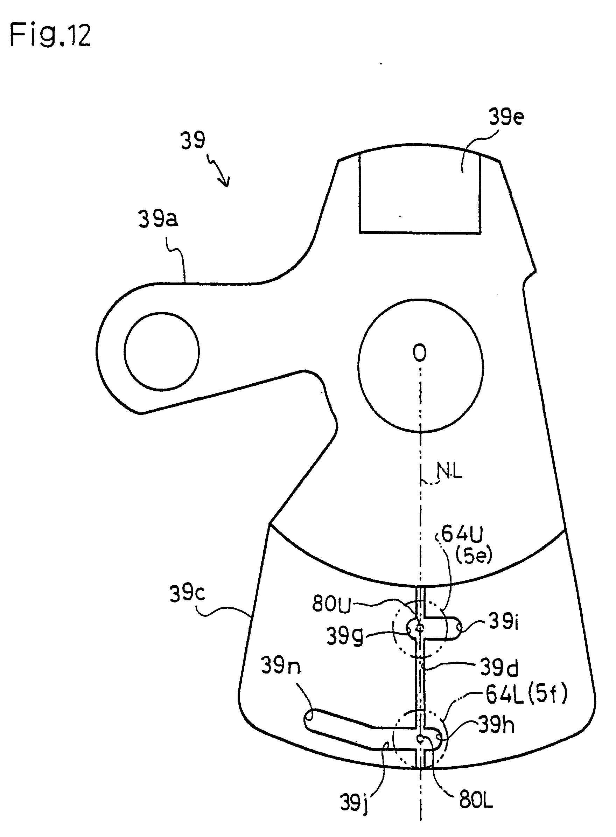

With regard to a second modification shown in Fig. 12, vertical groove 39d and first transverse grooves 39g and 39h are similar to the preferred first embodiment shown in Figs. 5 and 6. One of second transverse grooves 39i and 39j is extended so that either orifice 80U or 80L is in communication with the extended second transverse groove at any position of one of advancing and reversing ranges A and R of control arm 39. In the case shown in Fig. 12, an extending groove 39n is formed so as to extend from the end of lower second transverse groove 39j, whereby lower orifice 80L is in communication with either groove 39j or 39n at all the positions between the neutral position N and the maximum position of reversing range R of control arm 39. Lower second transverse groove 39j and extending groove 39n are formed in a bending shape corresponding to the locus of lower orifice 80L. They may be formed in an arcuate shape. Accordingly, when the:speed changing member in the reversing range is released, the excessive pressure oil in second oil passage 5b is drained through lower orifice 80L and the series of extending groove 39n and lower second transverse groove 39j in all the reversing range R of control arm 39, so that dynamic braking is rarely applied during deceleration of reversing between the maximum position and the neutral position. Such variation of opening condition of orifices 80U and 80L in relation to the whole rotational positions of control arm 39 according to the second modification of the first embodiment is shown in Fig. 13.

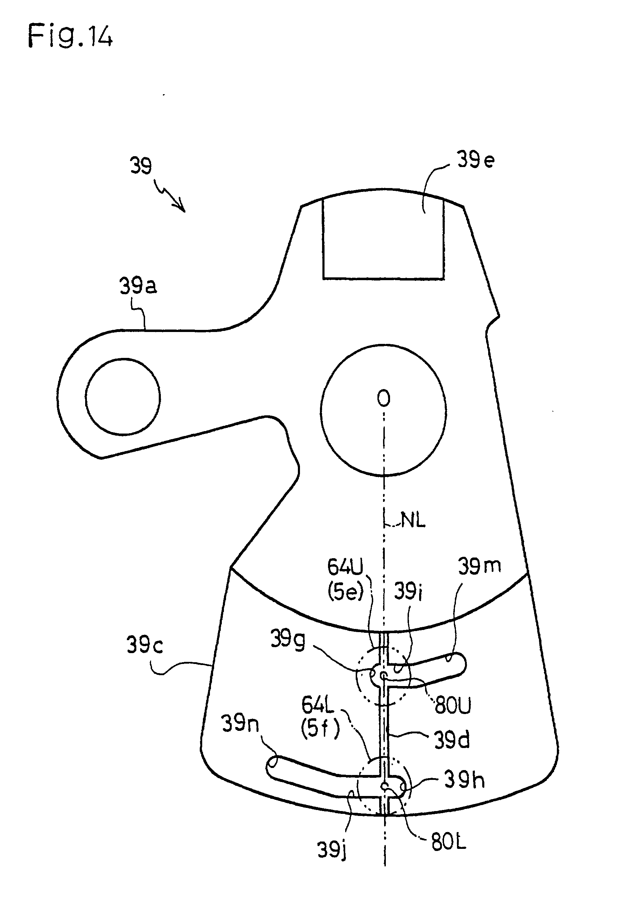

With regard to a third modification shown in Fig. 14 serving as a modification of the second modification shown in Fig. 12, extending grooves 39m and 39n are extended from the ends of both second transverse grooves 39i and 39j, respectively, so that the two series of grooves 39i and 39m, and 39j and 39n forms a bending shape corresponding to the locus of orifices 80U and 80L in all of the advancing and reversing rotational ranges A and R of control arm 39. Thus, even in the event of returning to neutral from the maximum position of advancing and reversing of the speed changing member, the excessive pressure oil in the higher-pressured one of oil passages 5a and 5b is drained until the neutral position, thereby preventing the vehicle from dynamic braking during deceleration of advancing and reversing.

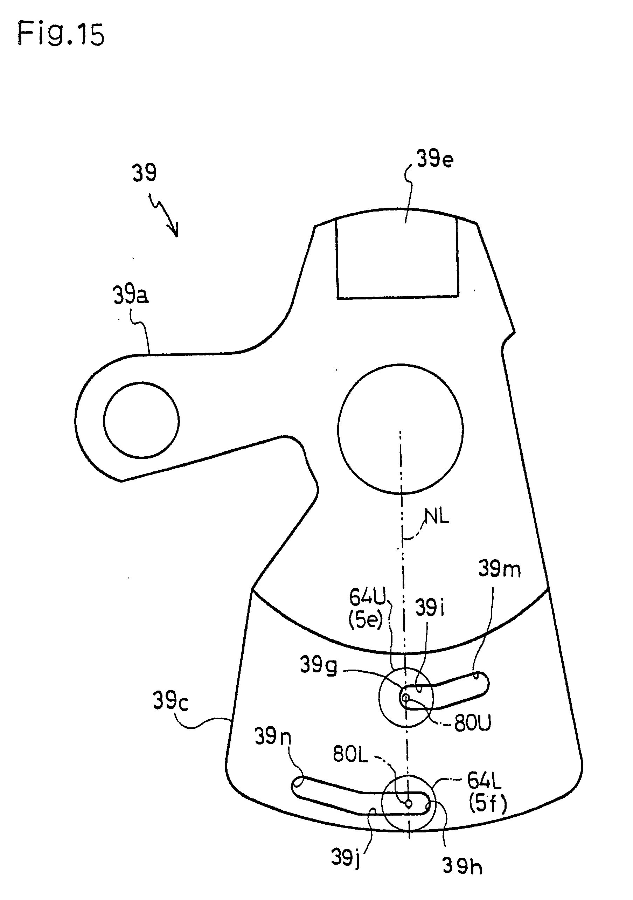

With regard to a fourth modification shown in Fig. 15, which is a modification of that shown in Fig. 14, the cross-sectional areas of second transverse grooves 39i and 39j and extending grooves 39m and 39n are large enough to drain the excessive pressure oil in the higher-pressured one of oil passages 5a and 5b sufficiently, thereby allowing vertical groove 39d to be removed. Hence, control arm 39 become so simple as to be produced at low cost.

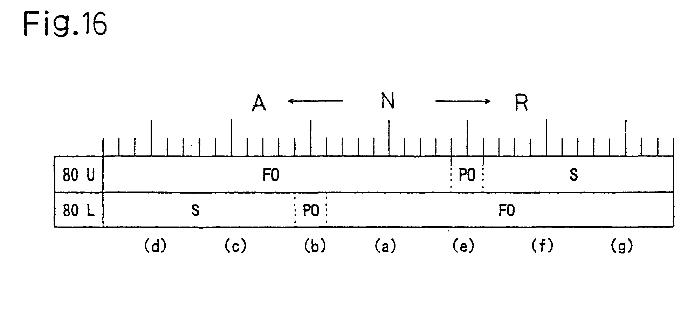

Such variation of conditions of orifices 80U and 80L in relation to the whole rotational positions of control arm 39 according to the third and fourth modifications of the second embodiment is shown in Fig. 16.

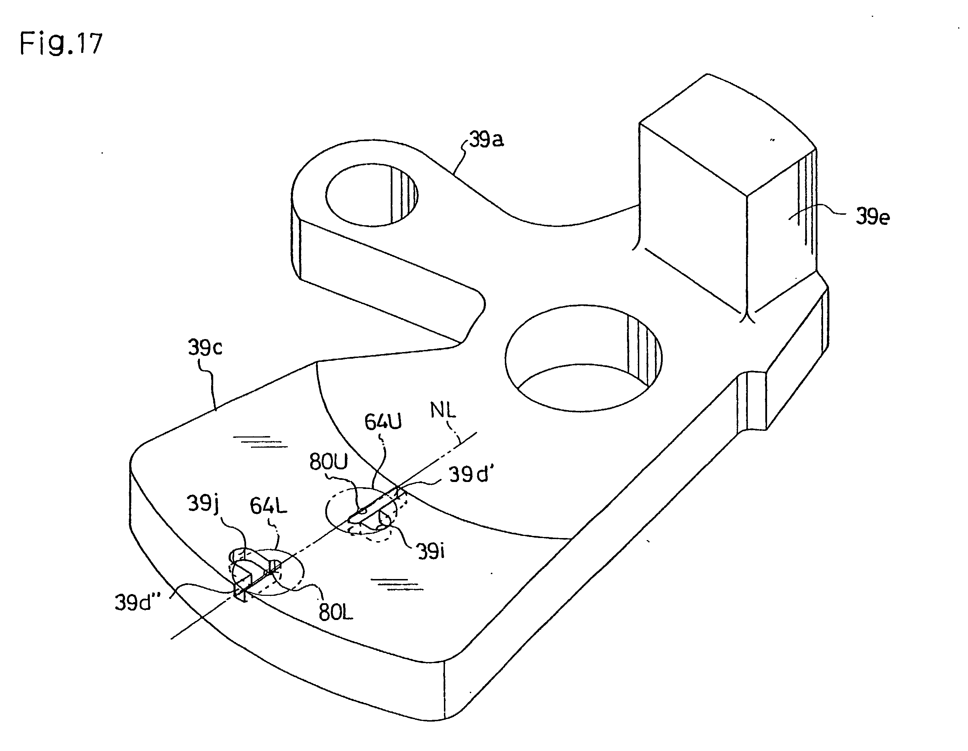

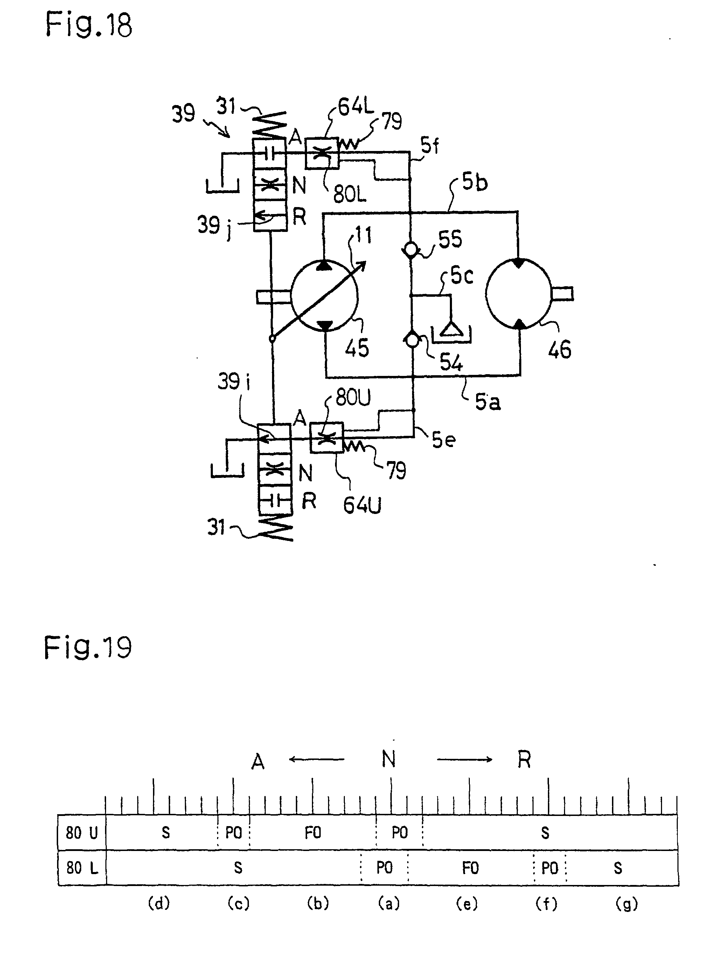

Next, explanation will be given on a second embodiment of control arm 39 in accordance with Figs. 17 through 23. As shown in Fig. 18, 19, 21 and 23, the second embodiment of control arm 39 is characterized in that both orifices 80U and 80L are partly open toward the oil sump in neutral position N.

A preferred second embodiment of control arm 39 shown in Fig. 17 is provided on the surface of contact plate 39c thereof with upper , and lower second transverse grooves 39i and 39j which have the construction and function in similar to the first embodiment. Vertical groove 39d of the first embodiment is replaced with upper vertical groove 39d' and lower vertical groove 39d", which are connected with upper second transverse groove 39i and lower second transverse groove 39j, respectively, and are open at the upper and lower ends thereof toward the oil sump. Orifices 80U and 80L are diametrically larger than those of the first embodiment, so that when the vehicle in neutral is left on slope, the increased pressure oil by back pressure is drained so much as to become impossible to hold hydraulic motor 46. It will be advantageous in manufacturing and will prevent orifices 80U and 80L, which are diametrically larger, from stop up.

Furthermore, the center line of the width of upper vertical groove 39d' is offset from the vertical line serving as the horizontal center of contact plate 39c, which is common with neutral line NL in neutral position N, toward upper second transverse groove 39i, and that of lower vertical groove 39d" is offset therefrom toward lower second transverse groove 39j, so that when control arm 39 is at neutral position N, upper orifice 80U is put on a vertical edge of upper vertical groove 39d' in opposite to upper second transverse groove 39i, and lower orifice 80L is put on that of lower vertical groove 39d" in opposite to lower second transverse groove 39j. Thus, at the position (a) as neutral position N shown in Figs. 18 and 19, the openings of orifices 80U and 80L are partly shut by contact plate 39c so as to be tightened. According to such construction, when the vehicle in neutral is left on a slope, the increased pressure oil by back pressure in the closed fluid circuit is hard to be drained, thereby preventing the vehicle from easily descending the slope.

At the positions (b) and (e) of control arm 39 shown in Fig. 19 as the starting of advancing and reversing, one of orifices 80U and 80L is fully open to corresponding one of grooves 39d', 39d", 39i and 39j, and the other is shut by contact plate 39c, thereby enabling the vehicle to start for advancing and reversing swiftly.

At the positions (c) and (f) shown in Fig. 19, one of orifices 80U and 80L is put on the end of corresponding second transverse groove 39i or 39j so that the opening is tightened. During deceleration of advancing and reversing by returning to neutral, when control arm 39 passes the positions (c) or (f), the excessive pressure oil in the higher-pressured oil passage 5a or 5b is drained through corresponding orifice 80U or 80L and second transverse groove 39i or 39j, thereby damping the decelerating shock. At the positions (d) and (g), both orifices 80U and 80L are shut so that the HST can be operated with the whole of its capacity.

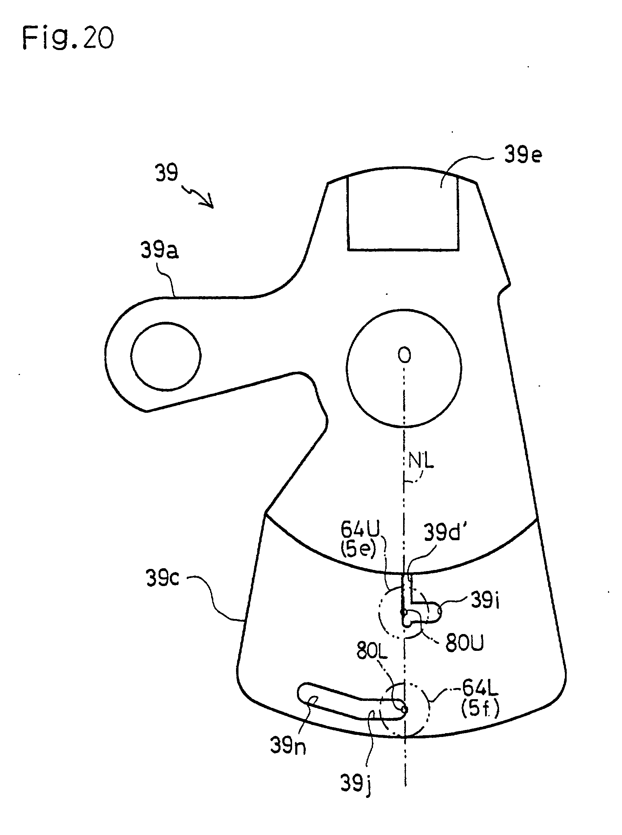

Referring to Figs. 20 through 23, modifications of the second embodiment of control arm 39 will be described.

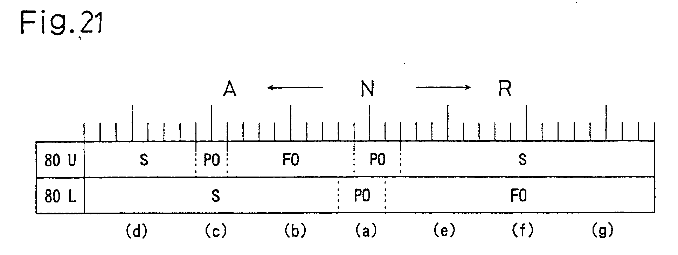

With regard to a first modification shown in Fig. 20, lower vertical groove 39d" is removed. Extending groove 39n is extended from the end of lower second transverse groove 39j, whereby lower orifice 80L is fully open to the series of grooves 39j and 39n during the whole reversing range R as shown in Fig. 21, so that the excessive pressure oil in higher-pressured second oil passage 5b is drained so as to damp the "dynamic brake" during deceleration of advancing. The opening patterns of orifices 80U and 80L in relation to the whole rotational positions of control arm 39 of the first modification is shown in.Fig. 21.

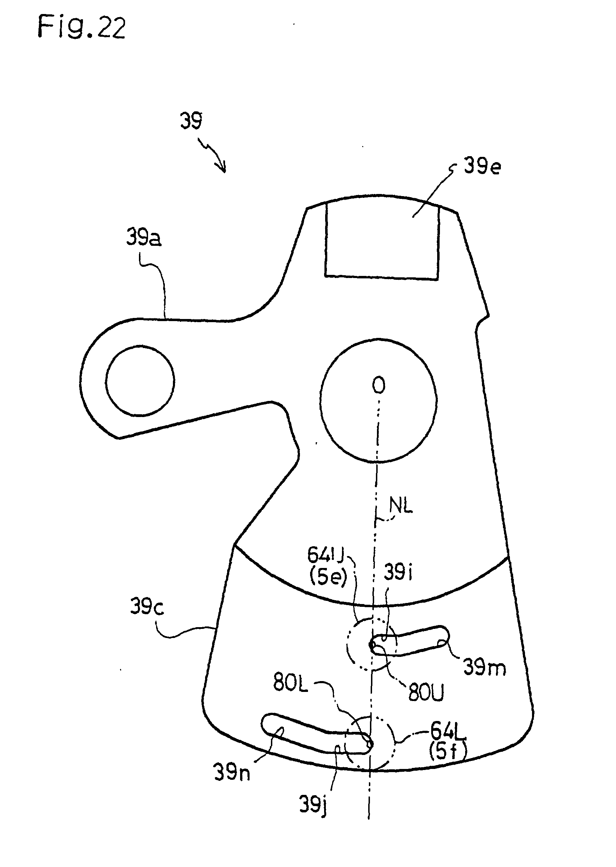

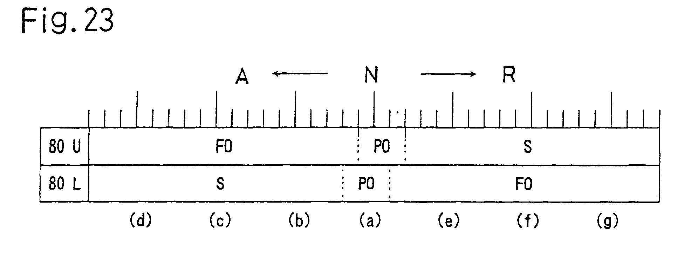

With regard to a second modification shown in Fig. 22, upper vertical groove 39d' is also removed and extending groove 39m is also extended from the end of upper second transverse groove 39i in addition to the construction of the first modification. Due to the construction, upper and lower orifices 80U and 80L are full open to the respective series of grooves 39i and 39m, and 39j and 39n during the whole advancing and reversing ranges A and R as shown in Fig. 23, so that the excessive pressure oil in higher-pressured one of oil passages 5a and 5b is drained to damp the "dynamic brake" during deceleration of advancing and reversing.

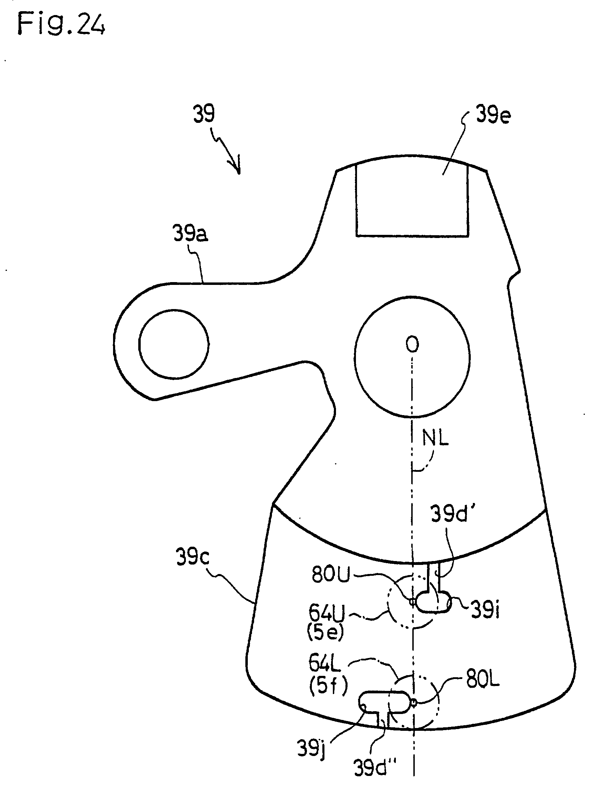

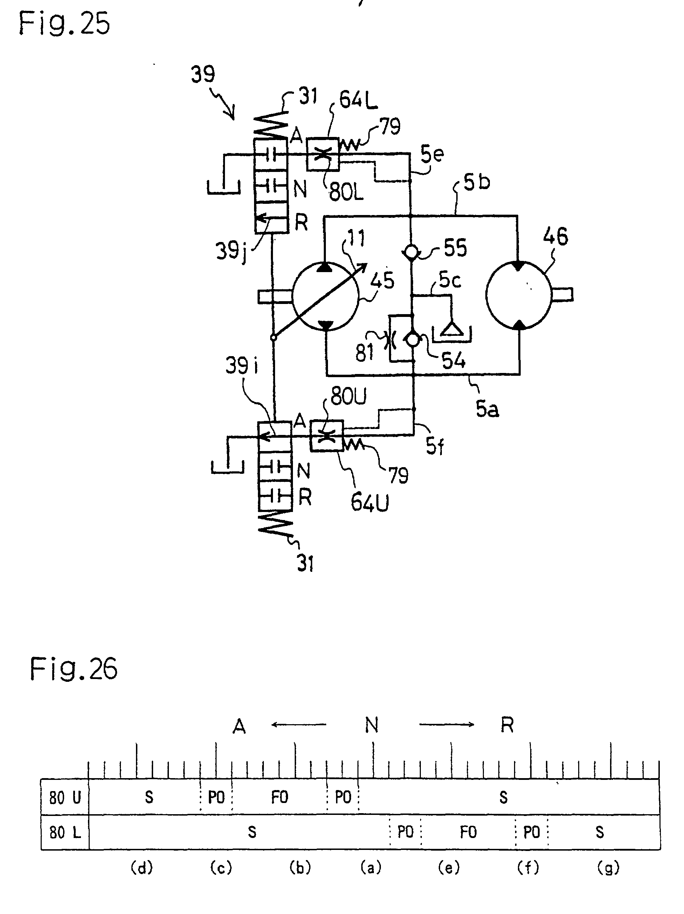

Next, explanation will be given on a third embodiment of control arm 39 in accordance with Figs. 24 through 30. The third embodiment is characterized in that both orifices 80U and 80L are shut by contact plate 39c when control arm 39 is located in neutral position N or the position (a) as shown in Figs. 25, 26, 28 and 30.

A preferred third embodiment of control arm 39 shown in Fig. 24 is provided with second transverse grooves 39i and 39j formed similar to those of the first and second embodiments of control arm 39. Upper vertical groove 39d', whose top is open to the oil sump, is offset from the vertical line constituting a horizontal center of contact plate 39c, which is common with neutral line NL passing center O and both the centers of orifices 80U and 80L in neutral position N, so as to be connected at the lower end thereof with the intermediate portion of upper second transverse groove 39i. Lower vertical groove 39d", whose lower end is open to the oil sump, is offset from the same vertical line so as to be connected at the upper end thereof with the intermediate portion of lower second transverse groove 39j. At the position (a) of control arm 39 as neutral position N shown in Figs. 25 and 26, both orifices 80U and 80L are shut by contact plate 39c, however, an orifice 81 is interposed between first and second oil passages 5a and 5b in the closed fluid circuit so as to be disposed in parallel to check valve 54 as shown in Fig. 25, thereby giving a dead zone of the HST in the neutral position thereof. The pressure oil, which is drained through orifice 81 at the neutral position, is so limited as to prevent the vehicle in neutral left on a slope from descending.

As shown in Fig. 26, in case of acceleration of advancing, at the position (b) of control arm 39, lower orifice 80L connected to higher-pressured second oil passage 5b is shut by contact plate 39c, thereby enabling the vehicle to start swiftly.

In case of deceleration of advancing by returning to neutral, at the position (d) of control arm 39c, the closed fluid circuit is back pressured so that a "dynamic brake" is applied on the vehicle. At the position (c), upper orifice 80U connected to higher-pressured first oil passage 5a is put on the end of upper second transverse groove 39i to be tightened with its opening and afterward enters it, thereby damping the "dynamic brake". Just before the neutral position as the position (b), upper orifice 80U is tightened and is finally shut by contact plate 39c at the neutral position (a), thereby apply the "dynamic brake" on the vehicle again so as to stop it.

In case of acceleration of reversing, at the position (e) of control arm 39, upper orifice 80U connected to higher-pressured first oil passage 5a is shut by contact plate 39c, thereby enabling the vehicle to start swiftly.

In case of deceleration of reversing by returning to neutral, at the position (g) of control arm 39c, the closed fluid circuit is back pressured so that a "dynamic brake" is applied on the vehicle. At the position (f), lower orifice 80L connected to higher-pressured second oil passage 5b is put on the end of lower second transverse groove 39j to be tightened with its opening and afterward enters it, thereby damping the "dynamic brake". Just before the neutral position as the position (e), lower orifice 80L is tightened and is finally shut by contact plate 39c at the neutral position (a), thereby apply the "dynamic brake" on the vehicle again so as to stop it.

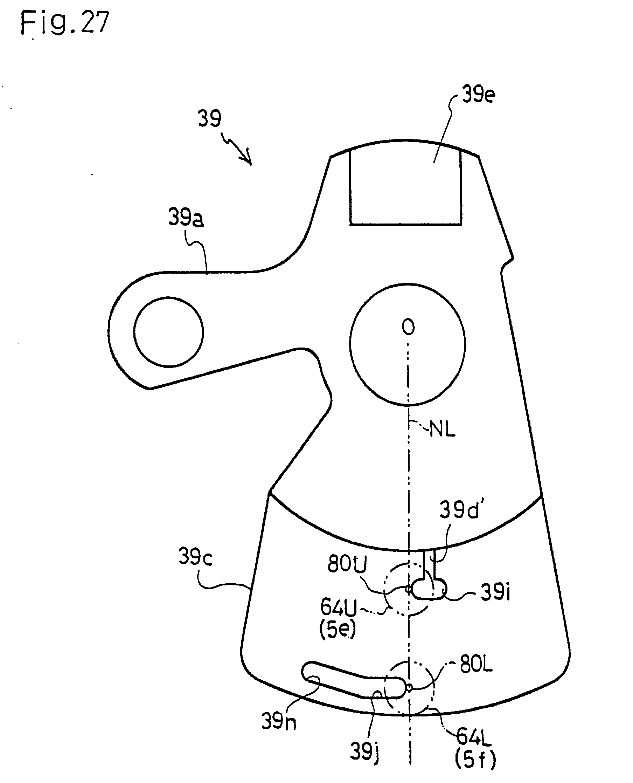

Referring to Figs. 27 through 30, modification of the third embodiment of control arm 39 will be described.

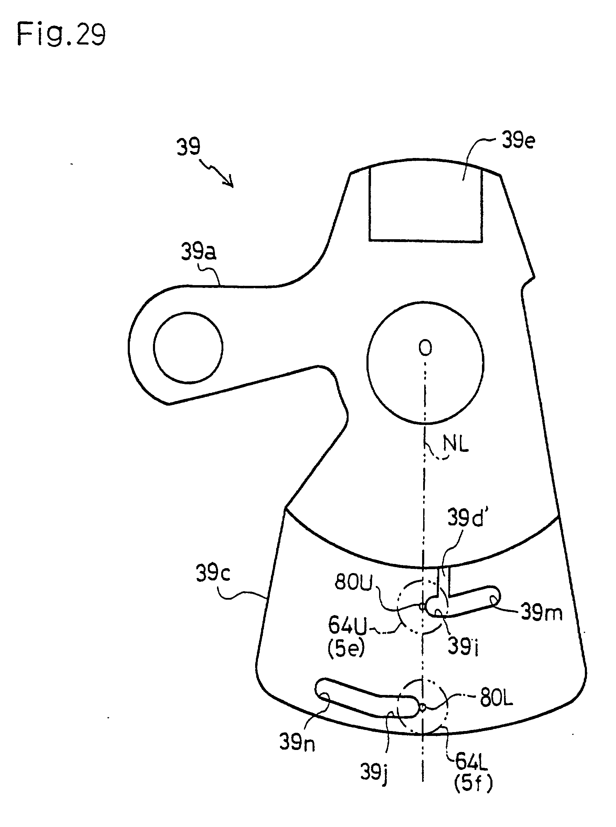

For a first modification shown in Fig. 27, lower vertical groove 39d" is removed and extending groove 39n is extended from the end of lower second transverse groove 39j. For a second modification shown in Fig. 29, lower vertical groove 39d" is similarly removed similarly and extending groove 39m is additionally extended from the end of upper second transverse groove 38i.

According to the first modification, the "dynamic brake" is damped during deceleration of reversing by returning to neutral, and at the neutral position, the "dynamic brake" is applied so as to stop the vehicle. According to the second modification, the same phenomenon also occurs during deceleration of advancing by returning to neutral.

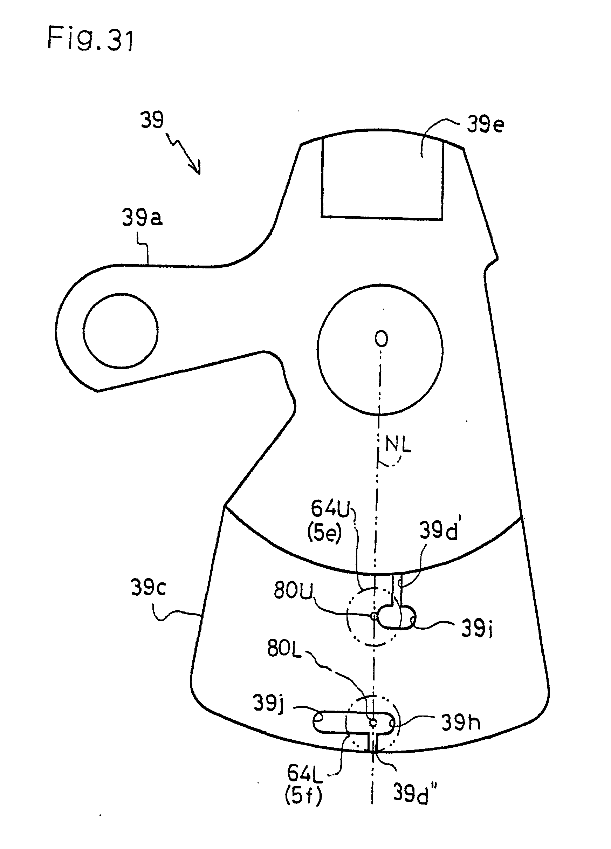

Next, explanation will be given on a fourth embodiment of control arm 39 in accordance with Figs. 31 through 33. This is a mixture of first and third embodiments. In this regard, as shown in Fig. 31, vertical groove 39d is divided into upper vertical groove 39d' and lower vertical groove 39d", which are open to the oil sump. Similar to the first embodiment, lower vertical groove 39d", which is located along neutral line NL in neutral position N, is connected with lower first and second transverse grooves 39h and 39j. Similar to the third embodiment, upper vertical groove 39d' is offset so as to be connected with the intermediate portion of upper second transverse groove 39i, so that it does not communicate with upper orifice 80U at neutral position N.

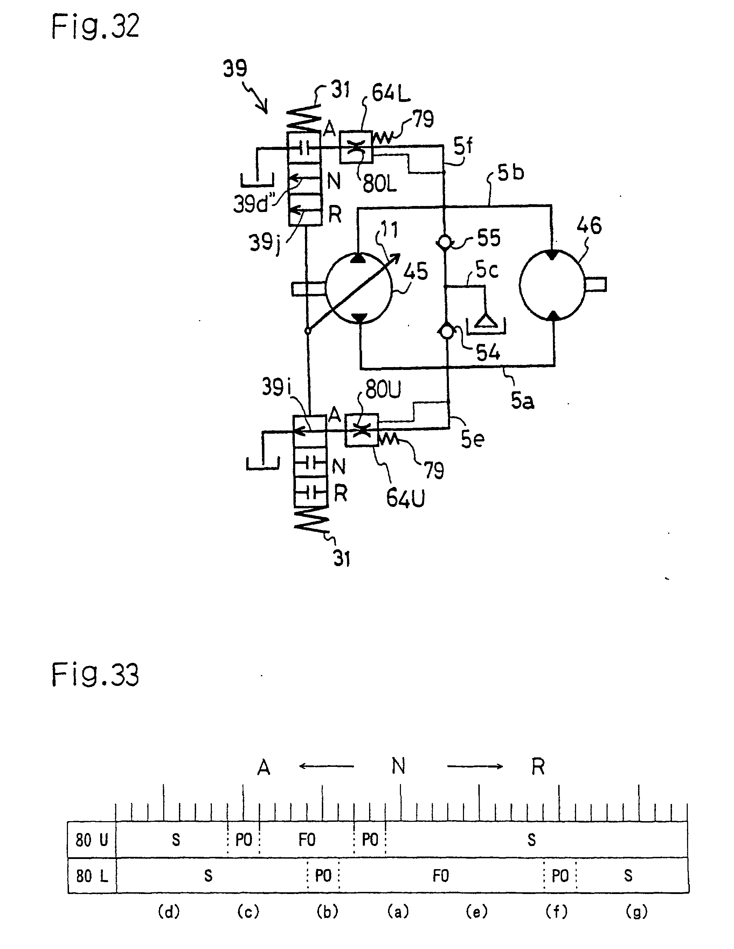

Due to such construction, as shown in Figs. 32 and 33, at the position (a) as neutral position N, only lower orifice 80L is fully open to the oil sump and upper orifice 80U is shut by contact plate 39c, so as to limit the drained excessive pressure oil in the closed circuit in neutral position N. Hence, the vehicle in neutral left on a slope is prevented from descending.

At the position (b) as starting of advancing, the excessive pressure oil in higher-pressured second oil passage 5b is drained through lower orifice 80L which is fully open to first transverse groove 39h and lower vertical groove 39d", thereby moderating the .advancing starting shock. In this embodiment, damping of the shock of reversing start is out of consideration so that upper first transverse groove 39g is eliminated.

For a short time until the neutral position during returning to neutral in advancing and reversing, one of orifices 80U and 80L enters corresponding second transverse groove 39i or 39j, thereby moderating the shock of deceleration and braking. Second transverse grooves 39i or 39j may be extended so as to form extending grooves 39m or 39n as the above. In this case, for all the time of returning to neutral in advancing or reversing, dynamic braking can be damped.

As the fourth embodiment, the shape of groove on control arm 39 can be constructed by mixing any two of the above three embodiments. Also, it can be constructed by employing any two of the above various modifications. Accordingly, orifices 80U and 80L can be made in communication with the oil sump in various timing patterns.

## Claims

1. A hydrostatic transmission (HST) for driving an a xle (7), comprising:
a fluid sump,
a variable capacity hydraulic pump (45) and a hydraulic motor (46), said hydraulic pump (45) being fluidly connected with said hydraulic motor (46) through a pair of fluid passages (5a,5b),
capacity changing means (11,38,39) provided for said hydraulic pump (45), said capacity changing means (11,38,39) being able to be shifted between a neutral position (N) where said hydraulic pump (45) discharges substantially no f luid and an acting range (A,R) where said hydraulic pump (45) discharges operating fluid to said hydraulic motor (46) for driving said axle (7),
first biasing means (31) biasing said capacity changing means (11,38,39) in said acting range (A,R) toward said neutral position (N), and
an internal damping system comprising a pair of first orifices (80U,.80L) connected to said respective fluid passages (5a,5b) and a shutting member (39c) interlocked with said capacity changing means (11,38,39) and facing both of said first orifices (80U,80L) so as to be operable to connect/disconnect said first orifices (80U,80L) with/from said fluid sump,
**characterized in that**
said shutting member (39c) is provided with transverse grooves (39g-j,39n,39m), extending over a predetermined range such that said shutting member (39c) is adapted to connect at least one of said first orifices (80U,80L) via said transverse grooves (39g-j,39n,39m) with said fluid sump over said predetermined range in relation to the position of said capacity changing means to allow a part of said operating fluid to be drained from the fluid passages (5a,5b) th rough said at least one of said first orifices (80U,80L) when said capacity changing means (11,38,39) is shifted within said acting range (A,R).

2. A hydrostatic transmission according to claim 1, **characterized in that** said shutting member (39c) is adapted to partly connect each of said first orifices (80U,80L) with said fluid sump when said capacity changing means (11,38,39) is disposed at said neutral position (N).

3. A hydrostatic transmission according to claim 1, **characterized in that** said shutting member (39c) is adapted to connect at least one of said first orifices (80U,80L) with said fluid sump when said capacity changing means (11,38,39) is disposed at said neutral position (N).

4. A hydrostatic transmission according to claim 3, **characterized by** further comprising a second orifice (81) adapted to always drain a part of said operating fluid in both of said fluid passages (5a,5b) to said fluid sump.

5. A hydrostatic transmission according to claim 1, **characterized in that** said first orifices (80U,80L) have extremely small diameters and said shutting member (39c) is adapted to connect the whole of an opening area of each of said first orifices (80U,80L) with said fluid sump when said capacity changing means (11,38,39) is disposed at said neutral position (N).

6. A hydrostatic transmission according to any one of claims 1 to 5, **characterized in that**, in the case that said capacity changing means (11,38,39) returns to said neutral position (N), said shutting member (39c) is adapted to disconnect both of said first orifices (80U,80L) from said fluid sump until said capacity changing means (11,38,39) reaches a predetermined position in said acting range (A,R), and to connect at least one of said first orifices (80U,80L), which is connected to a higher-pressured one of said pair of fluid passages (5a,5b), with said fluid sump while said capacity changing means (11,38,39) moves from said predetermined position in said acting range (A,R) to said neutral position (N).

7. A hydrostatic transmission according to any one of claims 1 to 5, **characterized in that**, in the case that said capacity changing means (11,38,39) returns to said neutral position (N), said shutting member (39c) is adapted to connect at least one of said first orifices (80U,80L), which is connected to a higher-pressured one of said pair of fluid passages (5a,5b), with said fluid sump while said capacity changing means (11,38,39) moves from any position in said acting range (A,R) to said neutral position (N).

8. A hydrostatic transmission according to any one of claims 1 to 7, **characterized in that** said shutting member (37c) is adapted to connect both of said first orifices (80U,80L) with said fluid sump as soon as said capacity changing means (11,38,39) leaves said neutral position (N), and to disconnect at least one of said first orifices (80U,80L), which is connected to a higher-pressured one of said pair of fluid passages (5a,5b), from said fluid sump when said capacity changing means (11, 38, 39) moves further away from said neutral position (N).

9. A hydrostatic transmission according to any one of claims 1 to 8, **characterized in that** said axle (7) and said hydrostatic transmission (HST) are contained in a housing (1,2).

10. A hydrostatic transmission according to any one of claims 1 to 9, **characterized in that** said internal damping system further comprises a pair of pistons (64U,64L) provided with said first orifices (80U,80L), which are adapted to be pushed against said shutting member (39c) by hydraulic pressure in said respecitive fluid passages (5a,5b).

11. A hydrostatic transmission according to claim 10, **characterized in that** said internal damping system further comprises a pair of second biasing means (79) pushing said respective pistons (64U,64L) against said shutting member (39c) so that the amount of said forces of both of said second biasing means (79) and said hydraulic pressure in said fluid passages (5a,5b) pusing said pistons (64U,64L) against said shutting member (39c) is smaller than the biasing force of said first biasing means (31).

## Patentansprüche

1. Hydrostatisches Getriebe (HST) zum Antreiben einer Achse (7), mit:
einem Fluidsumpf,
einer Hydraulikpumpe (45) mit variabler Kapazität und einem Hydraulikmotor (46), wobei die Hydraulikpumpe (45) über ein Paar Fluiddurchgänge (5a,5b) mit dem Hydraulikmotor (46) in Fluidverbindung steht,
Kapazitätsänderungsmitteln (11,38,39), die für die Hydraulikpumpe (45) vorgesehen sind, wobei die Kapazitätsänderungsmittel (11,38,39) zwischen einer Neutralposition (N), in der die Hydraulikpumpe (45) im wesentlichen kein Fluid austrägt, und einem Wirkungsbereich (A,R), in dem die Hydraulikpumpe (45) Betriebsfluid zu dem Hydraulikmotor (46) zum Antreiben der Achse (7) austrägt, verschoben bzw. geschaltet werden kann,
einem ersten Vorbelastungsmittel (31), welches das Kapazitätsänderungsmittel (11,38,39) in dem Wirkungsbereich (A,R) zu der Neutralposition (N) hin vorbelasten kann, und
einem internen Dämpfungssystem mit einem Paar erster Öffnungen (80U,80L), die mit den jeweiligen Fluiddurchgängen (5a,5b) verbunden sind, und einem mit dem Kapazitätsänderungsmittel (11,38,39) verriegelten und beiden ersten Öffnungen (80U,80L) derart zugewandten Schließelement (39c), daß es zum Verbinden/Trennen der ersten Öffnungen (80U,80L) mit/von dem Fluidsumpf betätigbar ist,
**dadurch gekennzeichnet, daß**
das Schließelement (39c) mit Transversalnuten (39g-j, 39n,39m) versehen ist, die sich über einen vorbestimmten Bereich so erstrecken, daß das Schließelement (39c) mindestens eine der ersten Öffnungen (80U,80L) über die Transversalnuten (39g-j,39n,39m) mit dem Fluidsumpf in dem vorbestimmten Bereich in Relation zu der Position des Kapazitätsänderungsmittels verbinden kann, um eine Drainage eines Teils des Betriebsfluids aus den Fluiddurchgängen (5a,5b) durch die mindestens eine der ersten Öffnungen (80U,80L) zu ermöglichen, wenn das Kapazitätsänderungsmittel (11,38,39) in dem Wirkungsbereich (A,R) verschoben bzw. geschaltet wird.

2. Hydrostatisches Getriebe nach Anspruch 1, **dadurch gekennzeichnet, daß** das Schließelement (39c) teilweise jede der ersten Öffnungen (80U,80L) mit dem Fluidsumpf verbinden kann, wenn das Kapazitätsänderungsmittel (11,38,39) an der Neutralposition (N) angeordnet ist.

3. Hydrostatisches Getriebe nach Anspruch 1, **dadurch gekennzeichnet, daß** das Schließelement (39c) mindestens eine der ersten Öffnungen (80U,80L) mit dem Fluidsumpf verbinden kann, wenn das Kapazitätsänderungmittel (11,38,39) an der Neutralposition (N) angeordnet ist.

4. Hydrostatisches Getriebe nach Anspruch 3, **dadurch gekennzeichnet, daß** es ferner eine zweite Öffnung (81) umfaßt, die immer einen Teil des Betriebsfluids in beiden Fluiddurchgängen (5a,5b) zum Fluidsumpf ablaufen lassen kann.

5. Hydrostatisches Getriebe nach Anspruch 1, **dadurch gekennzeichnet, daß** die ersten Öffnungen (80U,80L) extrem kleine Durchmesser aufweisen und das Schließelement (39c) die gesamte Öffnungsfläche jeder der ersten Öffnungen (80U,80L) mit dem Fluidsumpf verbinden kann, wenn das Kapazitätsänderungsmittel (11,38,39) an der Neutralposition (N) angeordnet ist.

6. Hydrostatisches Getriebe nach einem der Ansprüche 1 bis 5, **dadurch gekennzeichnet, daß** in dem Fall, in dem das Kapazitätsänderungsmittel (11,38,39) zu der Neutralposition (N) zurückkehrt, das Schließelement (39c) beide ersten Öffnungen (80U,80L) vom Fluidsumpf trennen kann, bis das Kapazitätsänderungsmittel (11,38,39) eine vorbestimmte Position in dem Wirkungsbereich (A,R) erreicht, und mindestens eine der ersten Öffnungen (80U,80L), die mit einem mit höherem Druck beaufschlagten des Paars von Fluiddurchgängen (5a,5b) verbunden ist, mit dem Fluidsumpf verbinden kann, während sich das Kapazitätsänderungsmittel (11,38,39) von der vorbestimmten Position in dem Wirkungsbereich (A,R) zur Neutralposition (N) bewegt.

7. Hydrostatisches Getriebe nach einem der Ansprüche 1 bis 5, **dadurch gekennzeichnet, daß** in dem Fall, in dem das Kapazitätsänderungsmittel (11,38,39) zu der Neutralposition (N) zurückkehrt, das Schließelement (39c) mindestens eine der ersten Öffnungen (80U,80L), die mit einer mit höherem Druck beaufschlagten des Paars von Fluiddurchgängen (5a,5b) verbunden ist, mit dem Fluidsumpf verbinden kann, während sich das Kapazitätsänderungsmittel (11,38,39) von einer beliebigen Position in dem Wirkungsbereich (A,R) zu der Neutralposition (N) bewegt.

8. Hydrostatisches Getriebe nach einem der Ansprüche 1 bis 7, **dadurch gekennzeichnet, daß** das Schließelement (37c) beide ersten Öffnungen (80U,80L) mit dem Fluidsumpf verbinden kann, sobald das Kapazitätsänderungsmittel (11,38,39) die Neutralposition (N) verlässt, und mindestens eine der ersten Öffnungen (80U,80L), die mit einem mit höherem Druck beaufschlagten des Paars von Fluiddurchgängen (5a,5b) verbunden ist, von dem Fluidsumpf trennen kann, wenn sich das Kapazitätsänderungsmittel (11,38,39) von der Neutralposition (N) weiter wegbewegt.

9. Hydrostatisches Getriebe nach einem der Ansprüche 1 bis 8, **dadurch gekennzeichnet, daß** die Achse (7) und das hydrostatische Getriebe (HST) in einem Gehäuse (1,2) enthalten sind.

10. Hydrostatisches Getriebe nach einem der Ansprüche 1 bis 9, **dadurch gekennzeichnet, daß** das interne Dämpfungssystem ferner ein Paar mit den ersten Öffnungen (80U,80L) versehene Kolben (64U,64L) umfaßt, die durch Hydraulikdruck in den jeweiligen Fluiddurchgängen (5a,5b) gegen das Schließelement (39c) gedrückt werden können.

11. Hydrostatisches Getriebe nach Anspruch 10, **dadurch gekennzeichnet, daß** das interne Dämpfungssystem ferner ein Paar zweiter Vorbelastungsmittel (79) umfaßt, welche die jeweiligen Kolben (64U,64L) gegen das Schließelement (39c) derart drücken, daß der Betrag der Kräfte beider zweiter Vorbelastungsmittel (79) und des Hydraulikdrucks in den Fluiddurchgängen (5a,5b), welcher die Kolben (64U,64L) gegen das Schließelement (39c) drückt, kleiner als die Vorbelastungskraft des ersten Vorbelastungsmittels (31) ist.

## Revendications

1. Transmission hydrostatique (HST) pour entraîner un essieu (7), comportant :
un carter de fluide,
une pompe hydraulique à capacité variable (45) et un moteur hydraulique (46), ladite pompe hydraulique (45) étant connectée de manière hydraulique audit moteur hydraulique (46) à travers une paire de passages de fluide (5a, 5b),
des moyens de changement de capacité (11, 38, 39) agencés pour ladite pompe hydraulique (45), lesdits moyens de changement de capacité (11, 38, 39) pouvant être déplacés entre une position neutre (N), où ladite pompe hydraulique (45) ne décharge pratiquement aucun fluide, et une plage d'actionnement (A, R), où ladite pompe hydraulique (45) décharge un fluide de fonctionnement vers ledit moteur hydraulique (46) pour entraîner ledit essieu (7),
des premiers moyens de rappel (31) rappelant lesdits moyens de changement de capacité (11, 38, 39), dans ladite plage d'actionnement (A, R), vers ladite position neutre (N), et
un système d'amortissement intérieur comportant une paire de premiers orifices (80U, 80L) connectés auxdits passages de fluide respectifs (5a, 5b), et un élément d'obturation (39c) verrouillé mutuellement avec lesdits moyens de changement de capacité (11, 38, 39) et dirigé vers lesdits premiers orifices (80U, 80L), de manière à pouvoir être actionné pour connecter lesdits premiers orifices (80U, 80L) avec ledit carter de fluide, ou pour les déconnecter de celui-ci,
**caractérisée en ce que**
ledit élément d'obturation (39c) est muni de gorges transversales (39g à 39j, 39n, 39m) s'étendant sur une plage prédéterminée, de sorte que ledit élément d'obturation (39c) est adapté pour connecter au moins un orifice parmi lesdits premiers orifices (80U, 80L), via lesdites gorges transversales (39g à 39j, 39n, 39m), avec ledit carter de fluide sur ladite plage prédéterminée en fonction de la position desdits moyens de changement de capacité, pour permettre à une partie dudit fluide de fonctionnement d'être évacuée à partir des passages de fluide (5a, 5b) à travers ledit au moins un orifice parmi lesdits premiers orifices (80U, 80L), lorsque lesdits moyens de changement de capacité (11, 38, 39) sont déplacés dans ladite plage d'actionnement (A, R) .

2. Transmission hydrostatique selon la revendication 1, **caractérisée en ce que** ledit élément d'obturation (39c) est adapté pour connecter partiellement chacun desdits premiers orifices (80U, 80L) avec ledit carter de fluide, lorsque lesdits moyens de changement de capacité (11, 38, 39) sont disposés dans ladite position neutre (N).

3. Transmission hydrostatique selon la revendication 1, **caractérisée en ce que** ledit élément d'obturation (39c) est adapté pour connecter au moins un orifice parmi lesdits premiers orifices (80U, 80L) avec ledit carter de fluide, lorsque lesdits moyens de changement de capacité (11, 38, 39) sont disposés dans ladite position neutre (N).

4. Transmission hydrostatique selon la revendication 3, **caractérisée de plus en ce qu'**elle comporte un second orifice (81) adapté pour évacuer toujours une partie dudit fluide de fonctionnement situé dans chacun desdits passages de fluide (5a, 5b) vers ledit carter de fluide.

5. Transmission hydrostatique selon la revendication 1, **caractérisée en ce que** lesdits premiers orifices (80U, 80L) ont des diamètres extrêmement petits, et ledit élément d'obturation (39c) est adapté pour connecter la totalité d'une surface d'ouverture de chacun desdits premiers orifices (80U, 80L) avec ledit carter de fluide, lorsque lesdits moyens de changement de capacité (11, 38, 39) sont disposés dans ladite position neutre (N).

6. Transmission hydrostatique selon l'une quelconque des revendications 1 à 5, **caractérisée en ce que**, dans le cas dans lequel lesdits moyens de changement de capacité (11, 38, 39) retournent vers ladite position neutre (N), ledit élément d'obturation (39c) est adapté pour déconnecter lesdits premiers orifices (80U, 80L) à partir dudit carter de fluide jusqu'à ce que lesdits moyens de changement de capacité (11, 38, 39) atteignent une position prédéterminée dans ladite plage d'actionnement (A, R), et pour connecter au moins un orifice parmi lesdits premiers orifices (80U, 80L), lequel est connecté à un passage à pression plus élevée parmi ladite paire de passages de fluide (5a, 5b), avec ledit carter de fluide, pendant que lesdits moyens de changement de capacité (11, 38, 39) se déplacent depuis ladite position prédéterminée dans ladite plage d'actionnement (A, R) vers ladite position neutre (N).

7. Transmission hydrostatique selon l'une quelconque des revendications 1 à 5, **caractérisée en ce que**, dans le cas dans lequel lesdits moyens de changement de capacité (11, 38, 39) retournent vers ladite position neutre (N), ledit élément d'obturation (39c) est adapté pour connecter au moins un orifice parmi lesdits premiers orifices (80U, 80L), lequel est connecté à un passage à pression plus élevée parmi ladite paire de passages de fluide (5a, 5b), avec ledit carter de fluide, pendant que lesdits moyens de changement de capacité (11, 38, 39) se déplacent depuis une position quelconque dans ladite plage d'actionnement (A, R) vers ladite position neutre (N).

8. Transmission hydrostatique selon l'une quelconque des revendications 1 à 7, **caractérisée en ce que** ledit élément d'obturation (37c) est adapté pour connecter chacun desdits premiers orifices (80U, 80L) avec ledit carter de fluide dès que lesdits moyens de changement de capacité (11, 38, 39) quittent ladite position neutre (N), et pour déconnecter au moins un orifice parmi lesdits premiers orifices (80U, 80L), lequel est connecté à un passage à pression plus élevée parmi ladite paire de passages de fluide (5a, 5b), dudit carter de fluide, lorsque lesdits moyens de changement de capacité (11, 38, 39) se déplacent plus loin de ladite position neutre (N).

9. Transmission hydrostatique selon l'une quelconque des revendications 1 à 8, **caractérisée en ce que** ledit essieu (7) et ladite transmission hydrostatique (HST) sont contenus dans un boîtier (1, 2).

10. Transmission hydrostatique selon l'une quelconque des revendications 1 à 9, **caractérisée en ce que** ledit système d'amortissement intérieur comporte de plus une paire de pistons (64U, 64L) munis desdits premiers orifices (80U, 80L), qui sont adaptés pour être poussés contre ledit élément d'obturation (39c) par une pression hydraulique dans lesdits passages de fluide respectifs (5a, 5b).

11. Transmission hydrostatique selon la revendication 10, **caractérisée en ce que** ledit système d'amortissement intérieur comporte de plus une paire de seconds moyens de rappel (79) poussant lesdits pistons respectifs (64U, 64L) contre ledit élément d'obturation (39c), de sorte que la somme desdites forces de chacun desdits seconds moyens de rappel (79) et de ladite pression hydraulique située dans lesdits passages de fluide (5a, 5b) poussant lesdits pistons (64U, 64L) contre ledit élément d'obturation (39c) est plus petite que la force de rappel desdits premiers moyens de rappel (31).
